(19) Europäisches Patentamt
European Patent Office
Office européen des brevets

(11) EP 3 280 195 A1

(12) **EUROPEAN PATENT APPLICATION**
published in accordance with Art. 153(4) EPC

(43) Date of publication:
07.02.2018 Bulletin 2018/06

(51) Int Cl.:
*H04W 52/34* (2009.01)    *H04J 11/00* (2006.01)
*H04J 99/00* (2009.01)    *H04W 72/04* (2009.01)

(21) Application number: 16772417.8

(22) Date of filing: 18.03.2016

(86) International application number:
PCT/JP2016/058867

(87) International publication number:
WO 2016/158535 (06.10.2016 Gazette 2016/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.03.2015 JP 2015071924

(71) Applicant: NTT DOCOMO, INC.
Chiyoda-ku
Tokyo 100-6150 (JP)

(72) Inventors:
• TAKEDA, Kazuki
Tokyo 100-6150 (JP)

• UCHINO, Tooru
Tokyo 100-6150 (JP)
• NAGATA, Satoshi
Tokyo 100-6150 (JP)
• WANG, Lihui
Beijing 100190 (CN)
• LIU, Liu
Beijing 100190 (CN)
• JIANG, Huiling
Beijing 100190 (CN)

(74) Representative: Hoffmann Eitle
Patent- und Rechtsanwälte PartmbB
Arabellastraße 30
81925 München (DE)

(54) **USER TERMINAL, WIRELESS BASE STATION, AND WIRELESS COMMUNICATION METHOD**

(57) To carry out communications appropriately even if the number of component carriers settable to a user terminal is extended from the existing system. The user terminal according to one embodiment of the present invention is a user terminal which can communicate using a plurality of component carriers (CCs), which contains a generator unit which generates a power headroom report (PHR) including information about a power headroom (PH) for each of CCs of a predetermined cell group among activated CCs and a transmission unit which transmits the generated PHR.

FIG. 12A

FIG. 12B

PHR CGs

| PHR CG1 | PHR CG2 | PHR CG3 | PHR CG4 |
|---|---|---|---|
| PCell ••• SCell 7 | SCell 8 ••• SCell 15 | SCell 16 ••• SCell 23 | SCell 24 ••• SCell 31 |

PUCCH CGs

| PUCCH CG1 | PUCCH CG2 | PUCCH CG3 | PUCCH CG4 |
|---|---|---|---|
| PCell ••• SCell 7 | SCell 8 ••• SCell 15 | SCell 16 ••• SCell 23 | SCell 24 ••• SCell 31 |

## Description

Technical Field

The present invention relates to a user terminal, a radio base station and a radio communication method in the next-generation mobile communication system.

Background Art

In the universal mobile telecommunications system (UMTS) network, the long term evolution (LTE) has been selected as a specification for the purpose of achieving a higher data rate, lower delay, etc. (Non-patent Literature 1). Further, a succeeding system of LTE, which is called "LTE advanced" (also called LTE-A) has been discussed for the purpose of broadening the band and enhancing the speed further from those of LTE and selected as specifications of LTE Rel. 10 to 12.

One of the broadband technologies of LTE Rel.10 to 12 is carrier aggregation (CA). With CA, a plurality of fundamental frequency blocks can be integrated as one to be used for communications. A fundamental frequency block in CA is called a component carrier (CC) and is equivalent to the system band of LTE Rel.8.

In LTE, a user terminal (UE) feeds back a power headroom report (PHR) including information about the uplink power headroom (PH) for each serving cell to a device of a network side (for example, radio base station (eNB)). A radio base station can dynamically control the uplink transmit power of a user terminal based on PHR.

Citation List

Non-patent literature

Non-patent literature 1: 3GPP TS 36.300 "Evolved Universal Terrestrial Radio Access (E-UTRA) and Evolved Universal Terrestrial Radio Access Network (E-UTRAN); Overall description; Stage 2"

Summary of Invention

Technical Problem

In CA in the succeeding system (LTE Rel.10 to 12) of LTE, the maximum number of CCs settable per user terminal is limited to five. On the other hand, in a further succeeding system of LTE, namely, LTE Rel. 13 or later, the delimitation of the number of CCs settable to a user terminal to six or more (over five CCs) is discussed to achieve more flexible and high-speed radio communications. Here, a carrier aggregation with six or more settable CCs may be called, for example, extended CA.

However, when the number of CC settable to a user terminal is extended to six or more (for example, 32), it is difficult to apply the method of using PHR of the existing system (Rel. 10 to 12) as it is. For example, in the existing system, it is presumed to use CA of five CCs or less, and therefore if a CA of six CCs or more is applied, there may be cases where the information about PH for each CC cannot be notified to the radio base station at an appropriate timing. Undesirably, this may result in that the radio base station cannot appropriately control the uplink transmit power of the user terminal.

The present invention has been proposed in consideration of the above-discussed point, and an object thereof is to provide a user terminal, a radio base station and a radio-communication method which are able to carry out communications properly even if the number of component carriers settable to a user terminal is extended from that of the existing system.

Solution to Problem

An according to one embodiment of the present invention, a user terminal using a plurality of component carriers (CCs) for communication, comprises: a generator unit which generates a power headroom report (PHR) including information about a power headroom (PH) for each of CCs of a predetermined cell group among activated CCs; and a transmission unit which transmits the generated PHR.

Advantageous Effects of Invention

According to the present invention, even if the number of component carriers settable to a user terminal is extended from that of the existing system, it is possible to carry out communications properly.

Brief Description of Drawings

FIG. 1 is a diagram showing an example of Rel.13 CA.
FIG. 2 is a diagram showing an example of PUCCH CG mode.
FIG. 3 is a diagram showing an applicable range of sets of PHR timers and parameters in the first embodiment.
FIG. 4 is a diagram showing an example of PHR MAC CE in the first embodiment.
FIG. 5 is a diagram showing an applicable range of PHR timers and parameters in the second embodiment.
FIG. 6 is a diagram showing an example of PHR MAC CE in the second embodiment.
FIG. 7 is a diagram showing an example of the timing of a PHR trigger in the first embodiment.
FIG. 8 is a diagram showing an example of PHR transmitted at times t1 and t2 in FIG. 7.
FIG. 9 is a diagram showing an example of the relationship between the power headroom (PH) and PUCCH/PUSCH transmit power.
FIG. 10 is a diagram showing an example of the timing of the PHR trigger in the second embodiment.
FIG. 11 is a diagram showing an example of PHR transmitted in FIG. 10B.
FIG. 12 is a diagram showing an example of the matching relationship between PHR CG and PUCCH CG.
FIG. 13 is a diagram showing another example of the matching relationship between PHR CG and PUCCH CG.
FIG. 14 is a conceptual diagram illustrating method 1.
FIG. 15 is a diagram showing an example of the configuration of PHR MAC CE transmitted in FIG. 14.
FIG. 16 is a diagram showing an example of a LCID value used for an uplink shared channel.
FIG. 17 is a conceptual diagram illustrating method 2.
FIG. 18 is a diagram showing an example of the configuration of PHR MAC CE transmitted in FIG. 17.
FIG. 19 is a diagram showing another example of method 2.
FIG. 20 is a diagram showing an example of the brief configuration of the radio communication system according to an embodiment of the present invention.
FIG. 21 is a diagram showing an example of the entire configuration of the radio base station according to an embodiment of the present invention.
FIG. 22 is a diagram showing an example of the functional configuration of the radio base station according to an embodiment of the present invention.
FIG. 23 is a diagram showing an example of the entire configuration of the user terminal according to an embodiment of the present invention.
FIG. 24 is a diagram showing an example of the functional configuration of the user terminal according to an embodiment of the present invention.

Description of Embodiments

In CA of the succeeding system (LTE Rel. 10-12) of the conventional LTE, the number of CCs settable per user terminal is limited to five at maximum. On the other hand, in LTE Rel.13 or later, which is a further succeeding system of LTE, the number of CCs settable per user terminal is delimited, and an extended carrier aggregation (also called CA enhancement, enhanced CA, Rel.13 CA, etc.) which sets six or more CCs (cells) is being discussed.

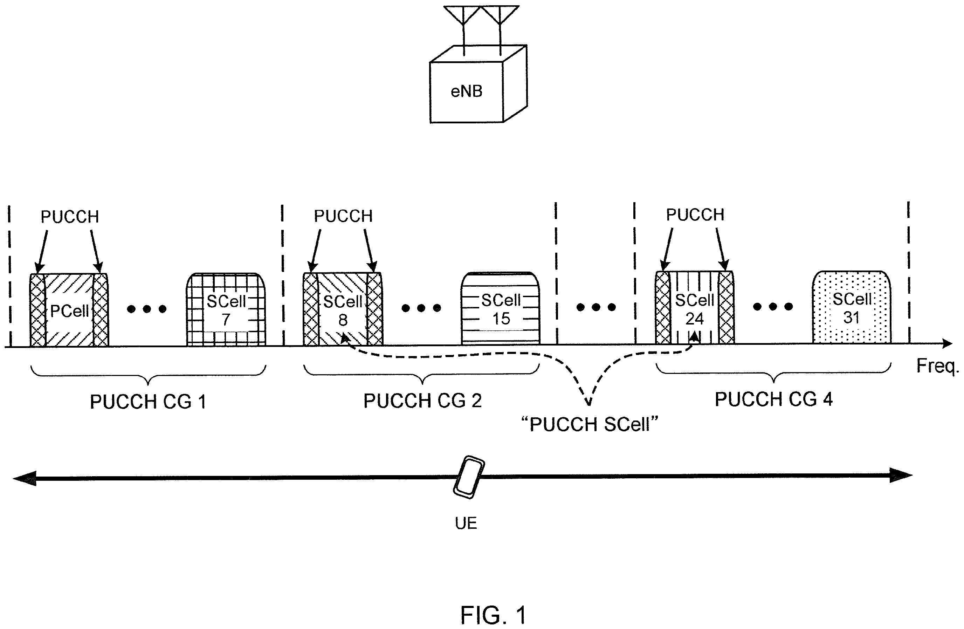

FIG. 1 is a diagram showing an example of Rel. 13 CA. As shown in FIG. 1, in Rel. 13 CA, it is assumed that a maximum of 32 CCs, for example, are bundled. Since it is inefficient from a viewpoint of communication overhead or controllability to transmit uplink control information (UCI) regarding such a number of CCs only by PUCCH of PCell, supporting of the PUCCH cell group (PUCCH CG) is discussed in Rel.13 CA.

One PUCCH cell is set for each PUCCH CG. For example, a PUCCH cell (PUCCH setting cell) may be a PCell, or an SCell (PUCCH-SCell) set to be PUCCH-transmittable. In the case of FIG. 1, four PUCCH CGs each comprising eight cells are set up, and SCell 8, SCell 24, etc. are set as PUCCH SCells.

It is not necessarily required to set two or more PUCCH CGs. In Rel. 13CA, it is discussed to support the mode in which a plurality of PUCCH cells are set (Multiple PUCCH CGs) and the mode in which PUCCH is transmitted only in a single cell (PCell) (Single PUCCH CG).

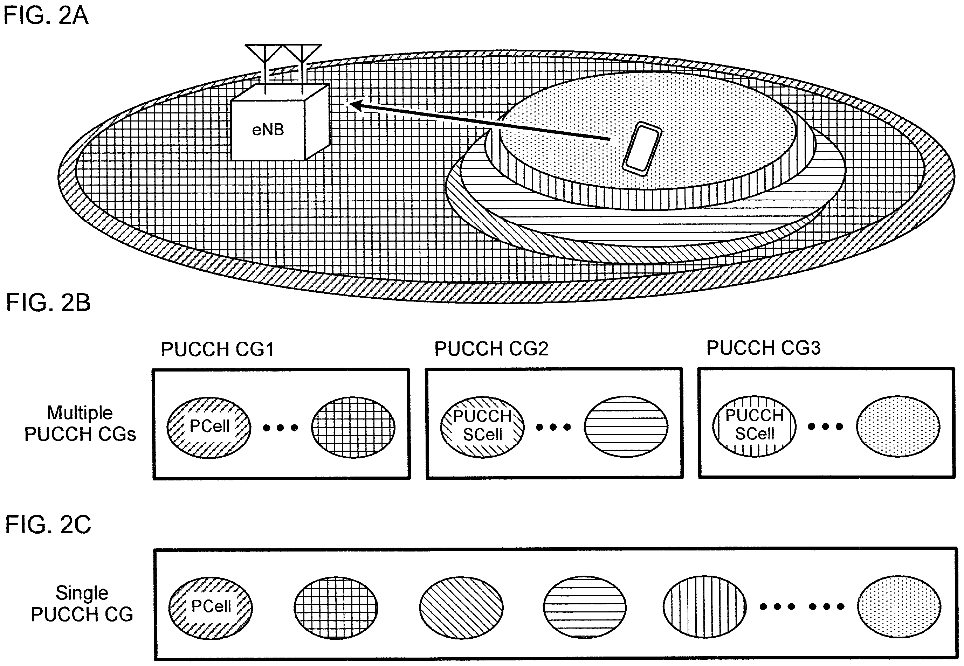

FIG. 2 is a diagram showing an example of the PUCCH CG mode. FIG. 2A shows an example in which a user terminal transmits an uplink signal to eNB using a plurality of cells. Further, FIG. 2B and 2C each show an example of the PUCCH CG mode corresponding to the example of FIG. 2A. For example, a plurality of PUCCH CGs may be set (FIG. 2B) or one PUCCH CG may be set (FIG. 2C).

In LTE, a user terminal feeds back power headroom report (PHR) including information about PH (PH information) for each serving cell to the radio base station. PHR comprises a PHR MAC control element (CE) contained in a medium access control protocol data unit (MAC PDU). PHR is transmitted by MAC signaling using a physical uplink shared channel (PUSCH). The radio base station can dynamically control the transmitted power from the user terminal based on the received PHR.

At present, two types of PHs (Type 1 PH and Type 2 PH) are specified. Type 1 PH is for the case where only PUSCH is considered, whereas Type 2 PH is for the case where both PUSCH and PUCCH are considered. Note that PH information may be a value of PH or an index related associated with the value (or level) of PH.

The radio base station transmits the PHR setting information about PHR transmission conditions to the user terminal. For example, RRC signaling is used for this notification. The user terminal determines the timing for transmitting PHR based on the notified PHR setting information. That is, when the PHR transmitting conditions are satisfied, PHR is triggered.

Here, as the PHR setting information, for example, two timers (periodicPHR-Timer and prohibitPHR-Timer) and a predetermined threshold (dl-PathlossChange) can be used. For example, when the prohibitPHR-Timer expires and the downlink path loss value changes from that at the time of the previous PHR transmission by dl-Pathloss Change or more, the PHR is triggered. Moreover, when the periodicPHR-Timer expires, the PHR is triggered. It is possible to specify other conditions to trigger PHR, but such explanation will be omitted. The PHR setting information may be called a PHR timer or a parameter set.

However, the existing system (Rel.10-12) is premised on CA including 5 CCs or less, and it is not defined how PHR is transmitted if CA including 6 or more CCs is applied. Therefore, there may be such cases where PH information of all the CCs cannot be notified to the radio base station.

Moreover, in the CA of the existing system, only one CC can transmit PUCCH, and therefore a PHR configuration for the case where PUCCH can be transmitted by 2 CCs or more has not been determined. For this reason, the radio base station may not be able to appropriately grasp PH for a certain predetermined PUCCH cell.

As described above, when applying CA including 6 CC or more, PHR cannot be appropriately reported, which may result in that the radio base station becomes unable to appropriately control the uplink transmit power of each CC of the user terminal. Thus, the uplink throughput is lowered and the communication quality is degraded, which may cause deterioration in the efficiency of extended CA.

Under these circumstances, the authors of the present invention devised to introduce a new PHR configuration different from that of the existing system so as to enable an uplink transmission power control provided for six or more CCs (for example, 32 CCs) in LTE Rel. 13 or later, which resulted in the present invention.

Hereafter, embodiments of the present invention will be described. The following embodiments describe examples where nine or more CCs, which cannot be supported by the conventional PHR (PHR MAC CE), are asset by the user terminal, but application of the present invention is not limited to these. For example, even when eight or less, or five or less CCs are set, the PHR described in each embodiment can be adopted.

(First Embodiment: CA-based PHR)

The first embodiment of the present invention uses a PHR extended further than that used by the conventional CA.

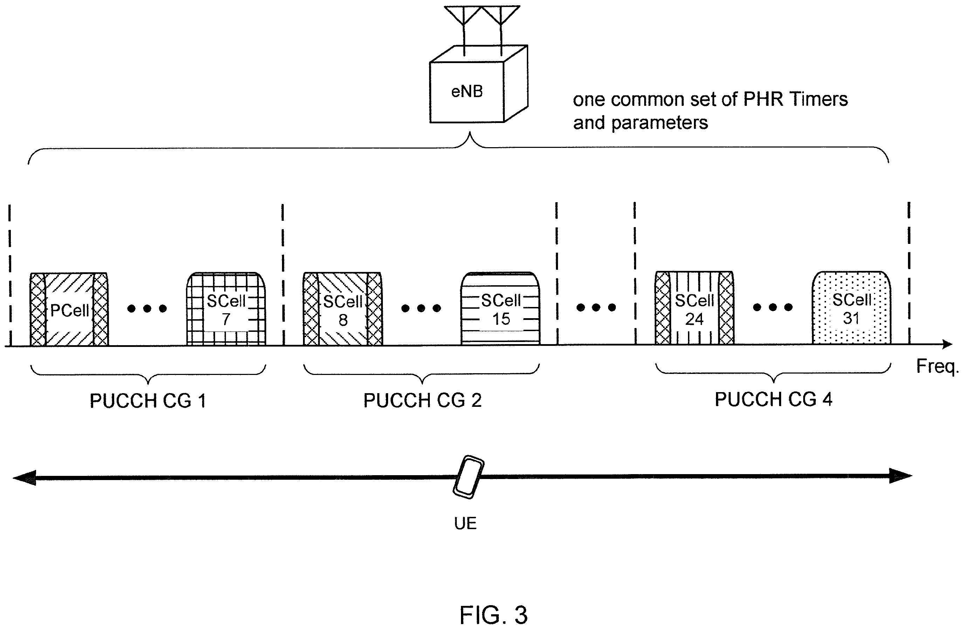

FIG. 3 is a diagram showing the range of application of a PHR timer and a parameter set in the first embodiment. As shown in FIG. 3, according to the first embodiment, all PUCCH CGs (that is, all CCs) are managed by one timer and one parameter set. In other words, if PHR is triggered in any of the CCs, PHR, which contain the PH information of all the activated (active) CCs, are transmitted.

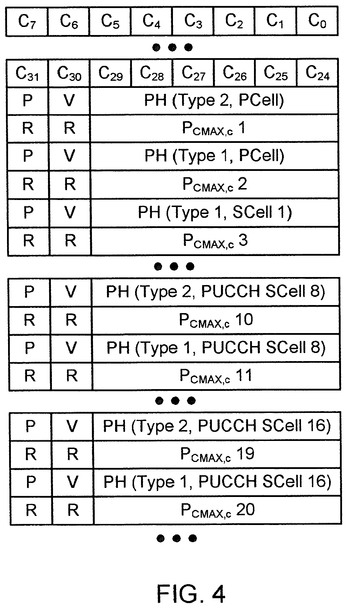

FIG. 4 is a diagram showing an example of PHR MAC CE in the first embodiment. The configuration shown in FIG. 4 is able to contain PH information of a maximum of 32 cells, unlike the PHR used in the CA of the existing system (That is, Extended PHR MAC CE). Type 2 PH information is included for PUCCH cells (PCell and PUCCH SCell).

As shown in FIG. 4, in the CA-based case, PHR is configured to contain Type 2 PH information and Type 1 PH information in the ascending order of the cells. Note that only Type 1 PH information is included for CCs to which Type 2 PH information need not to be notified (SCells to which PUCCH is not set).

Thus, according to the first embodiment, even if a CA including six CCs or more is applied, PHR including the PH information of all the CCs can be notified to the radio base station.

(Second Embodiment: DC-based PHR)

The second embodiment of the present invention uses a PHR extended further than that used by the conventional DC.

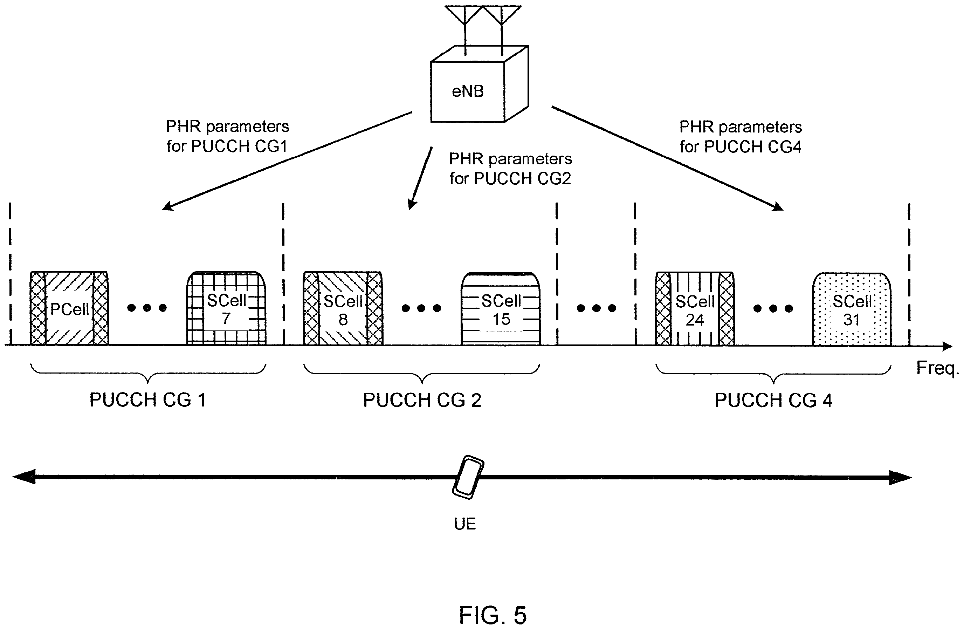

FIG. 5 is a diagram showing the range of application of the PHR timer and parameter in the second embodiment. As shown in FIG. 5, according to the second embodiment, the PUCCH CGs are managed by separate timers and parameters, respectively. Moreover, if PHR is triggered in any of the CCs, PHR, which contain the PH information of all the activated (active) CCs, are transmitted.

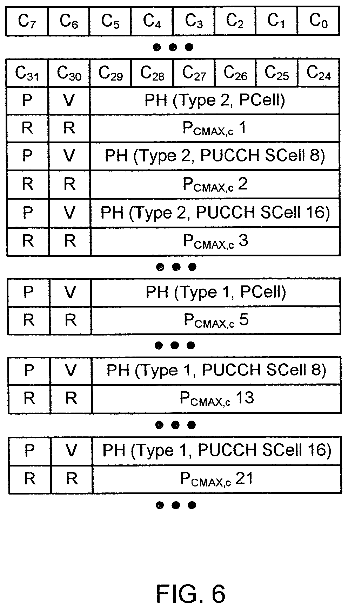

FIG. 6 is a diagram showing an example of PHR MAC CE in the second embodiment. The configuration shown in FIG. 6 is able to contain PH information of a maximum of 32 cells unlike the PHR used by DC of the existing system, (Dual Connectivity PHR MAC CE). Type 2 PH information is included for PUCCH cells (PCell and PUCCH SCell).

As shown in FIG. 6, in the DC-based case, PHR is configured to contain, first, Type 2 PH information in the ascending order of the PUCCH cell, and then Type 1 PH information in the ascending order of the cells. Note that only Type 1 PH information is included for CCs to which Type 2 PH information need not to be notified (SCells to which PUCCH is not set).

Thus, according to the second embodiment, even if CA including six CCs or more is applied, PHR, including the PH information of all the CCs, can be notified to the radio base station.

The examples discussed in the first and second embodiment are only examples, and the order, the number, etc of data in the array are not limited to these. For example, the number of cells for including information is not limited to a maximum of 32 cells. Moreover, it may be configured not to contain Type 2 PH information for PUCCH SCell, to reduce the amount of information.

Moreover, for the PHR MAC CE in the first and second embodiment, the logical channel ID (LCID), which is not used in the existing system (Rel.10-12), may be used. That is, the MAC PDU may be configured to contain a predetermined LCID in the MAC header, so as to indicate that the MAC PDU contains MAC CE equivalent to the PHR in the first or second embodiment.

(Third embodiment: PHR in units of PHR CG)

The third embodiment of the present invention uses PHRs generated in units of PHR CG (PHR cell group) obtained by grouping the CCs based on a predetermined rule.

Before explaining the third embodiment, the discussions and ideas made by the inventors to devise the embodiment will be outlined.

According to the first and second embodiments described above, PHR supporting the extended CA can be adopted while utilizing the PHR of the existing system as a base, and therefore such advantageous effects can be obtained that the implementation cost is low and the shifting is easily. On the other hand, when managing by one set of a PHR timer and a parameter as in the first embodiment, it is not possible to set different PH report cycles or PH report conditions from one CC (or CG) to another. For example, it is not possible to carry out such control of transmitting PHR by a small path loss change for PUCCH CG1, whereas transmitting PHR by a large path loss change for PUCCH CG2.

Moreover, the first and second embodiments are premised on that PH information of all the active CCs are transmitted when the PH report is triggered in any of the CCs, but in place, they entail such a drawback of a large overhead. Here, the overhead can be reduced by cutting the Type 2 PH information of PUCCH SCell. However, when the Type 2 PH information are not contained in PHR, it is not possible for a radio base station to correctly grasp the electric power of PUCCH SCell.

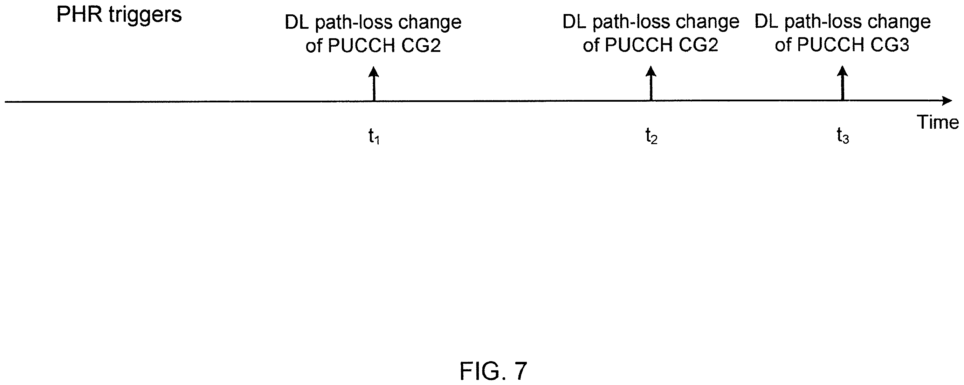

These drawbacks will be discussed in detail. FIG. 7 is a diagram showing an example of the timings of the PHR trigger in the first embodiment. In this example, let us suppose that the configuration of the extended CA is the same as that of FIG. 3. Moreover, let us suppose such a case where relatively fine TPC (Transmit Power Control) which reports PHR when 1 dB of downlink path loss change occurs (dl-PathlossChange = 1dB) is preferable for PUCCH CG2, whereas relatively rough TPC which reports PHR when 3 dB of a path loss change occurs (dl-PathlossChange = 3dB) is preferable for PUCCH CG3.

According to the first embodiment, only one PHR parameter set can be used, and therefore with a parameter set for PUCCH CG3, the power of PUCCH CG2 cannot be controlled appropriately. On the other hand, with a parameter set for PUCCH CG2, the PHR trigger by PUCCH CG3 increases, thereby undesirably increasing unnecessary communications.

The overhead will be described using an example case where a parameter set for PUCCH CG2 is used. In FIG. 7, PHR is triggered by path loss change of CG2 at times t1 and t2, and also PHR is triggered by path loss change of CG3 at time t3.

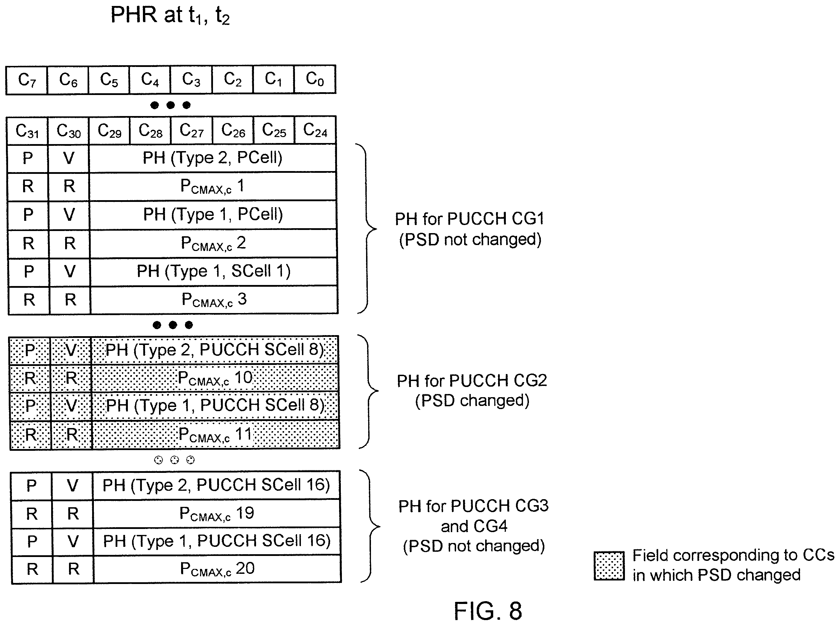

FIG. 8 is a diagram showing an example of PHRs transmitted at the times t1 and t2 in FIG. 7. Between these times, only CG which changed PSD (transmission power density) is PUCCH CG2. Therefore, PH information other than the PUCCH CG2 are redundant since the same (or substantially the same) contents are notified by the PHRs.

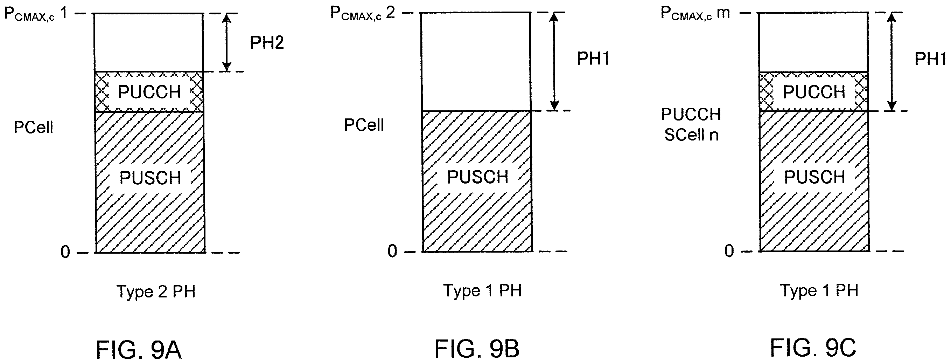

Next, reduction of the Type 2 PH information of PUCCH SCell in the first embodiment will be discussed. FIG. 9 is a diagram showing examples of the relationship between power head (PH) and PUCCH/PUSCH transmission power. FIGS. 9A and 9B each relate to a PCell. The electric powers are as follows:

$$(\text{Power used for PUSCH}) = P_{CMAX,c}2 - PH1;$$

and

$$(\text{Power used for PUCCH}) = P_{CMAX,c}1 - PH2 - (P_{CMAX,c}2 - PH1).$$

Here, PH1 is Type 1 PH and PH2 is Type 2 PH.

FIG. 9C shows a PUCCH SCell. The power used for PUSCH can be obtained by $P_{CMAX,c}m$ - PH1. On the other hand, when the information about Type 2 PH cannot be used, radio base stations cannot specify the power used for PUCCH of PUCCH SCell. Therefore, it is not preferable to reduce the information about Type 2 PH in order to decrease the overhead.

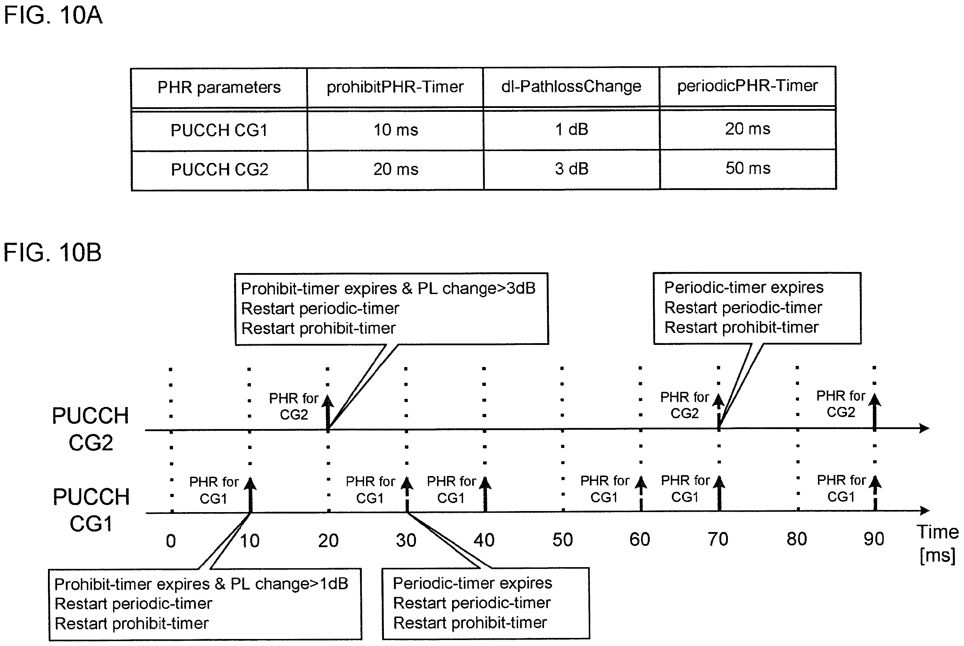

In the second embodiment, the timers and parameter sets can be set for each CG, and therefore it is possible to set, a trigger, a change in PH report cycle for each CG or a different path loss change. FIG. 10 is a diagram showing an example of the timings of the PHR trigger in the second embodiment. FIG. 10A shows sets of PHR timers and parameters of each PUCCH CG. The sets of PHR timers and parameters are independently set for the CGs, respectively.

FIG. 10B is a diagram showing an example of the timings of the PHR triggers controlled according to the sets of PHR timers and parameters shown in FIG. 10A. Here, an assumption case where the timers of both CGs start at a time 0 ms will be described. At t = 10 ms, prohibitPHR-Timer of CG1 expires and the path loss value changes dl-PathlossChange or more, and therefore PHR of CG1 is transmitted. Meanwhile, at t = 20 ms, prohibitPHR-Timer of CG2 expires and the path loss value changes dl-PathlossChange or more, PHR of CG2 is transmitted. Note that if PHR is transmitted from a CG, the timer of the CG is restarted.

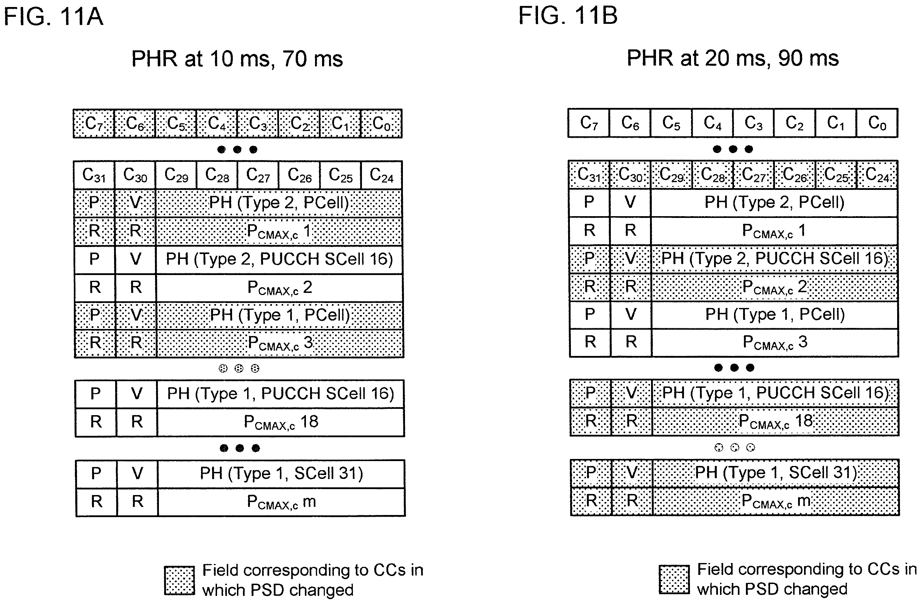

FIG. 11 is a diagram showing examples of the PHRs transmitted in FIG. 10B. Specifically, FIG. 11A is a diagram showing an example of PHRs transmitted at t= 10 ms and 70 ms in FIG. 10B. FIG. 11B is a diagram showing an example of PHRs transmitted at t = 20 ms and 90 ms in FIG. 10B.

As to PHR of CG1 shown in FIG. 11A, only CG which changed PSD is PUCCH CG1. Therefore, PH information other than PUCCH CG1 have not changed. Meanwhile, as to PHR of CG2 shown in FIG. 11B, only CG which changed PSD is PUCCH CG2. Therefore, PH information other than PUCCH CG2 have not changed.

Thus, even if the set of PHR timers and parameters are set for each respective CG, PH information of other CGs are inevitably contained in PHRs, thereby creating an unnecessary overhead.

Moreover, in FIG. 10B, both of the two CGs fulfill the PHR transmission conditions at t = 70 ms and t = 90 ms, and therefore two PHRs are transmitted. However, the PHRs transmitted by these CGs are of the completely same contents. Therefore, the information contained in one of the PHRs are entirely an overhead.

Moreover, even in the second embodiment, the power used for PUCCH cannot be specified without Type 2 PH information as illustrated in FIG. 9, it is not easy to reduce the overhead.

The inventors examined the above-described drawbacks and as a result, they devised an idea of grouping of CCs based on a predetermined rule. Moreover, they devised to include in PHR only PH information of CCs belonging to a predetermined group rather than including PH information of all active CCs. Based on these concepts, the inventors devised the third embodiment of the present invention. According to the structure of the third embodiment of the present invention, the sets of PHR timers and parameters can be independently assigned to each respective group, and also the overhead of PHR can be significantly reduced.

Hereafter, the third embodiment of the present invention will be described.

<Configuration of PHR CG>

In the third embodiment, a PHR cell group (PHR CG) is configured to a user terminal. The PHR CG is configured to contain one or more CC. The user terminal controls the transmission timing of PHR for each PHR CG using different PHR timers and parameters for one CG to another.

The PHR CG may be configured based on the existing CG or some other special CG, or the like. For example, The PHR CG may be configured based on PUCCH CG or TAG (Timing Advance Group).

The user terminal is configured to contain, in a predetermined MAC CE, only the information of PH of active cells belonging to a specific PHR CG. Further, not only Type 1 PH information but also Type 2PH information for PUCCH cells (PCell and PUCCH SCell) is included.

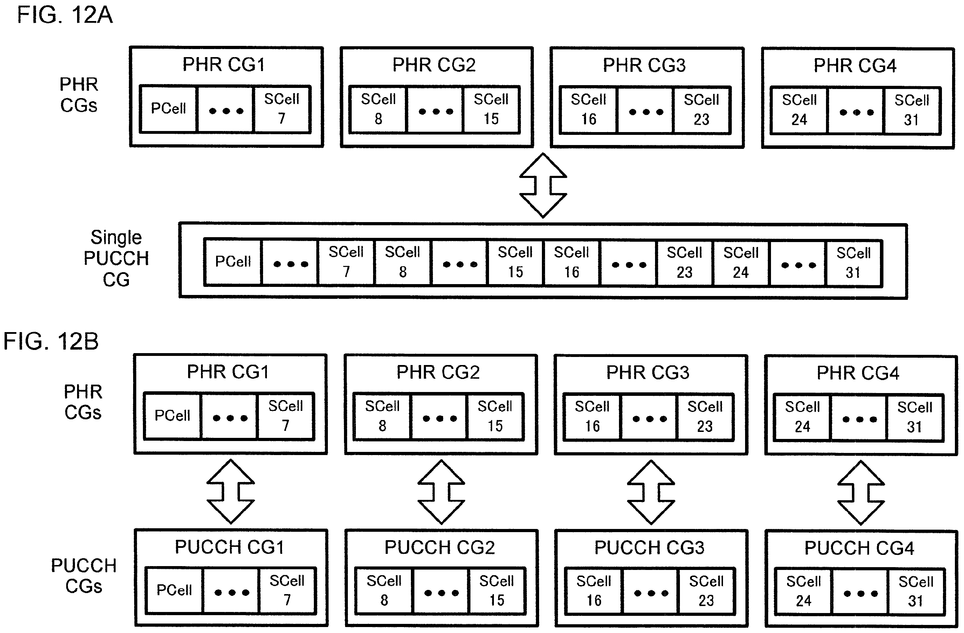

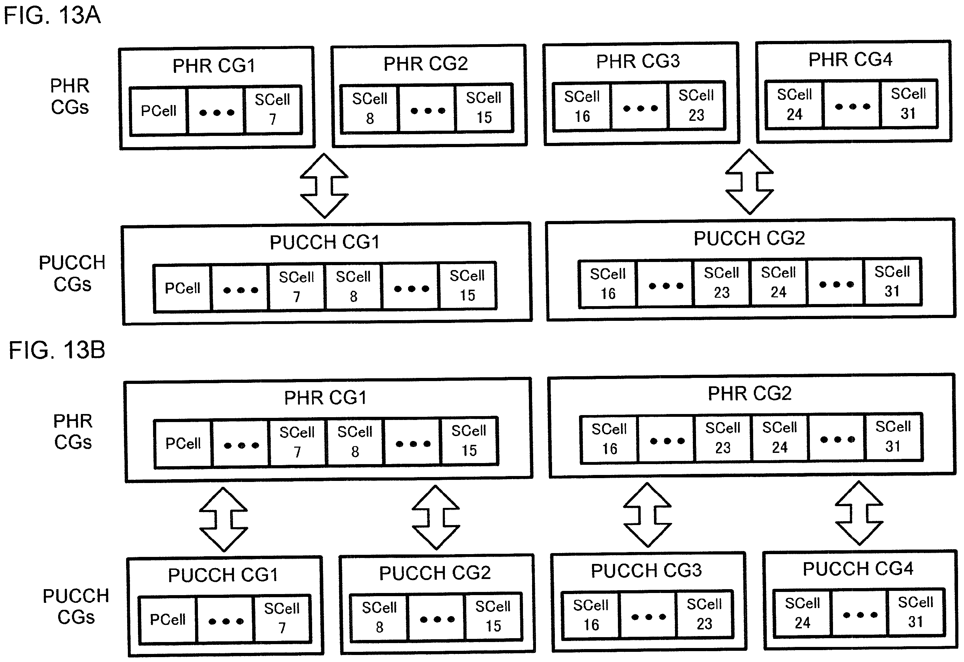

With reference to FIGS. 12 and 13, assumable matching relationships between PHR CGs and other types of CG will be described. Here, PUCCH CG will be listed as an example as the other type of CG, but it is not limited to this. Further, the user terminal is set for CA of 32 CCs, but it is not limited to this.

FIG. 12 is a diagram showing examples of the matching relationships between PHR CGs and PUCCH CGs. FIG. 12A shows an example in which a single PUCCH CG is assigned to the user terminal. In this example, CCs contained in a PUCCH CG are distributed to 4 PHR CGs in configuration units of 8 CCs. FIG. 12B shows an example in which a plurality of PUCCH CGs are assigned to the user terminal. In the example, one PUCCH CG corresponds to one PHR CG.

FIG. 13 is a diagram showing other examples of the matching relationships between PHR CGs and PUCCH CGs. FIG. 13A shows an example in which there are more PHR CGs in number than PUCCH CGs. In the example, a plurality of PHR CGs correspond to one PUCCH CG. FIG. 13B shows an example in which there are less PHR CGs in number than PUCCH CGs. In the example, one PHR CG corresponds to a plurality of PUCCH CGs.

As shown in FIGS. 12 and 13, the PHR CG can be flexibly configured. Therefore, it is possible to set PHR CGs appropriately according to the combination of CCs to which the same PHR timers and parameters should be applied.

In addition, the information about the configuration of PHR CG may be notified to the user terminal by, for example, a downlink control signal (DCI), upper layer signaling (such as RRC signaling), broadcast information, or a combination of any of these. For example, the setting information of the matching relationship between PHR CG and PUCCH CG may be notified, or the information of CCs which constitute PHR CG may be notified. The information about the configuration of PHR CG may be transmitted together with the PHR setting information, or contained in the PHR setting information to be transmitted. Moreover, the information about the configuration of PHR CG may be set in advance.

\<PHR transmitting method\>

In the third embodiment, two PHR transmitting methods will be described. By method 1, PHR of PHR CGn (n is a natural number, for example) is transmitted by one of activated CCs contained in the PHR CGn. In method 2, PHR of PHR CGn (n is a natural number, for example) is transmitted in arbitrary activated cells regardless of PHR CG.

In other words, with method 1, PHR MAC CE regarding a predetermined CG can be transmitted by a cell belonging to the predetermined CG. Further, by method 2, PHR MAC CE regarding a predetermined CG can be transmitted by a CC belonging to the same CG as the CG and/or a CC belonging to a different CG. These PHR MAC CEs can contain more information as compared to the conventional PHR MAC CE (Extended PHR MAC CE, Dual Connectivity PHR MAC CE, or the like).

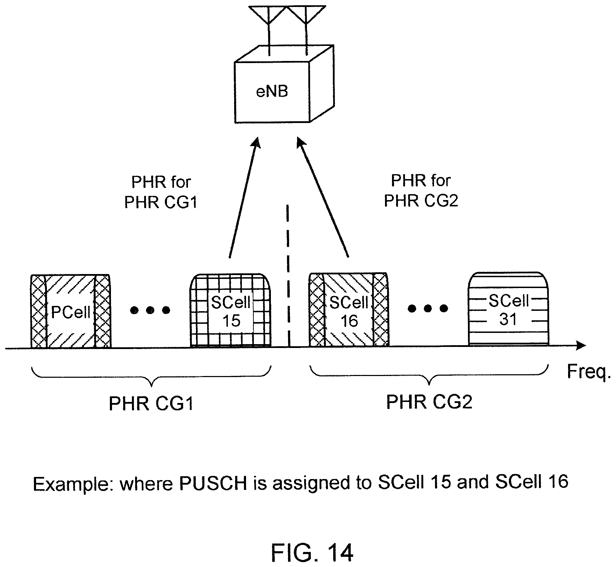

FIG. 14 is an explanatory diagram illustrating the concept of method 1. In FIG. 14, the user terminal is set for CA of 32 CCs, and PHR CG1 comprises PCell and SCells 1 to 15, whereas PHR CG2 comprises SCells 16 to 31.

In this example, PUSCHs are assigned to SCell 15 and SCell 16, respectively and PHRs of PHR CG1 and CG2 are transmitted by these PUSCHs. Note that here PHR CG1 and CG2 correspond to PUCCH CG1 and CG2, respectively, but the configuration is not limited to this.

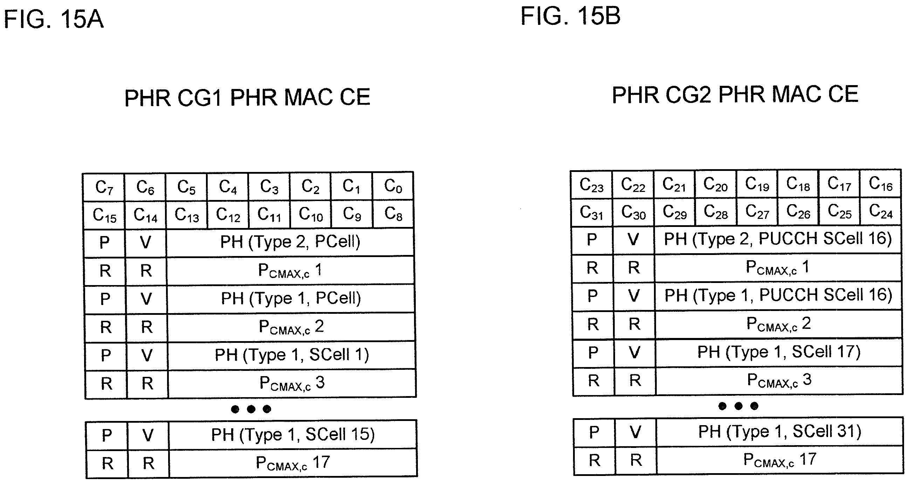

FIG. 15 is a diagram showing an example of the configuration of PHR MAC CE transmitted in FIG. 14. In FIG. 14, each PHR CG comprises 16 CCs. Therefore, as shown in FIG. 15A, PHR MAC CE of PHR CG1 is configured to contain PH information of 16 CCs contained in PHR CG1. Further, as shown in FIG. 15B, PHR MAC CE of PHR CG2 is configured to contain PH information of 16 CCs contained in PHR CG2.

With the above-described configuration, transmission of redundant PH information can be reduced. For example, in the example shown in FIG. 10B, it suffices only if PHRMAC CE (FIG. 15A) of PHR CG1 is transmitted at t = 10 ms, 70 ms and 90 ms, and PHR MAC CE (FIG. 15B) of PHR CG2 is transmit at t = 20 ms, 70 ms and 90 ms. At 70 ms and 90 ms, PHRs are transmitted using the CGs, but these PHRs contain only the PH information of the CCs belonging to each CG; therefore redundant information are not transmitted.

The PHRs of method 1 contains information to indicate that they are new PHRs different from the existing PHRs. The new PHRs may be called PHR CG PHRs. Specifically, MAC PDU in method 1 contains, in its MAC header, LCID not used by the existing system (Rel. 10-12).

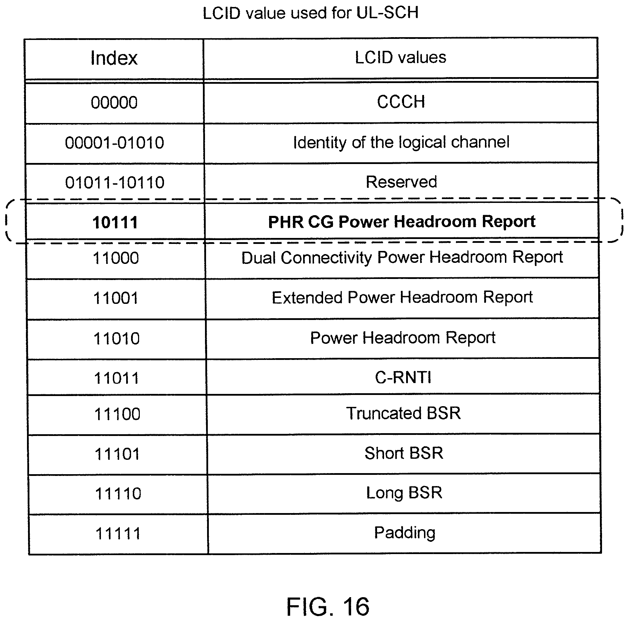

FIG. 16 is a diagram showing an example of the LCID value used for an uplink shared channel. In FIG. 16, LCID corresponding to an index "10111" indicates that MAC PDU including the LCID contain MAC CE equivalent to the PHR CG PHR. In the existing system, LCID corresponding to an index "10111" is only reserved and not used.

Note that the configuration of the LCID indicating PHR CG PHR is not limited that show in FIG. 16, but, it may be assigned to, for example, some other index.

In method 1, when a radio base station which received PHR detects LCID indicating PHR CG PHR, it judges that the PHR contains PH information of the CG used for the PHR transmission. That is, the radio base station grasp the CG to which the PHR corresponds according to the PHR CG to which UL serving cell used for the PHR transmission belongs.

As stated above, by the method 1, the PH information of all active CCs are not contained in the PHR MAC CE, but only the PH information of the CCs belonging to a PHR CG transmitting PHR are contained, thereby making it possible to reduce the overhead appropriately. Note that in method 1, when all CCs contained in an arbitrary PHR CG is inactive, it may be configured not to transmit PHR of the PHR CG regardless of the timer or the like. With this configuration, such occasions that PHRs about CCs not used (inactive CCs) are transmitted unnecessarily can be suppressed, thereby making it possible to further reduce the overhead.

On the other hand, method 2 can be further divided into two roughly. One is a method (method 2-1) in which MAC CE which can contain PHs of a plurality of CGs are contained in MAC PDU. The other is a method (method 2-2) in which a plurality of MAC CE which can contain PH of one CG are contained in MAC PDU.

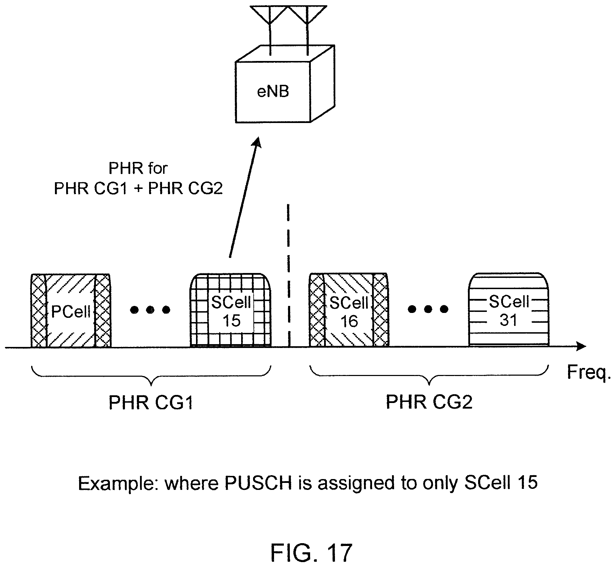

FIG. 17 is an explanatory diagram illustrating the concept of method 2. In FIG. 17, the user terminal is set for CA of 32 CCs, and it is set that PHR CG1 comprises PCell and SCells 1 to 15 and PHR CG2 comprises SCells 16 to 31.

In this example, PUSCH is assigned only to SCell 15 and PHRs of PHR CG1 and CG2 are transmitted by the PUSCH. Note that although PHR CG1 and CG2 correspond to PUCCH CG1 and 2, respectively, but the configuration is not limited to this.

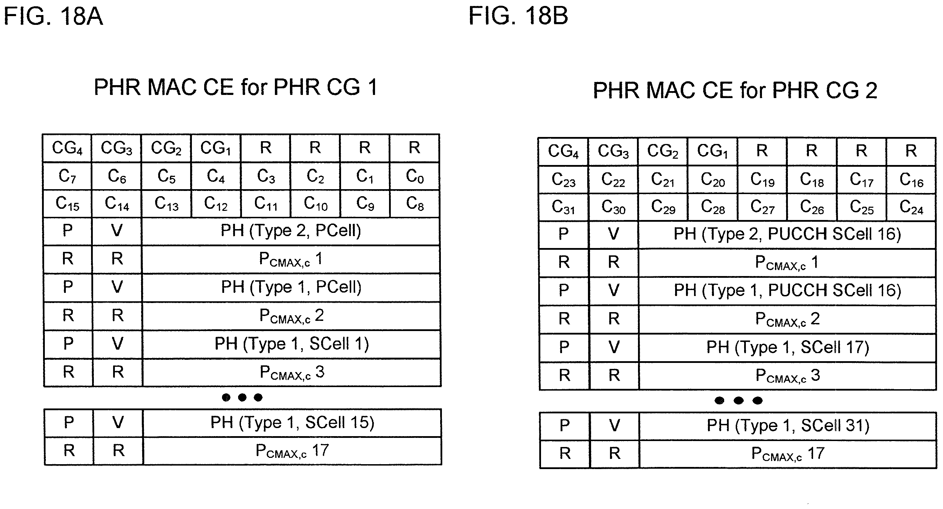

First, method 2-1 will be described. PHR MAC CE of method 2-1 contains a field for specifying to which PHR CG the information contained in the PHR MAC CE corresponds. FIG. 18 is a diagram showing an example of the configuration of the PHR MAC CE transmitted in FIG. 17.

In the PHR MAC CE of method 2-1, a field "CGi", which is not present in the existing PHR MAC CE, is added. The field "CGi" is used to indicate whether or not the MAC CE contains the data of a predetermined PHR CG (PHR $CG_i$). For example, $CG_i$ being '1' may indicate that the PH information of PHR $CG_i$ is contained, or $CG_i$ being '0' may indicate that the PH information of PHR $CG_i$ is not contained.

FIG. 18A shows an example of the information contained in PHR MAC CE for PHR $CG_1$. In the structure of FIG. 18A, the user terminal is set to, for example, $CG_1 = 1$ and $CG_2 = CG_3 = CG_4 = 0$. In this manner, the radio base station which received the MAC CE can recognize that the MAC CE contains the information about $CG_1$.

FIG. 18B show an example of the information contained in PHR MAC CE for PHR $CG_2$. In the structure of FIG. 18B, the user terminal is set to, for example, $CG_2 = 1$ and $CG_1 = CG_3 = CG_4 = 0$. In this manner, the radio base station which received the MAC CE can recognize that the MAC CE contains the information about $CG_2$.

FIG. 18 shows four fields of CG1 to CG4 as CGi, but the number of CGi(s) contained the MAC CE (that is, the maximum number of PHR CGs to be set) is not limited to this. For example, the maximum number of PHR CGs may be, for example, 4, 8, 16 or 32.

The PHRs of method 2 contains information to indicate that they are new PHRs different from the existing PHRs. Specifically, MAC PDU in method 2 contains, in its MAC header, LCID not used by the existing system (Rel. 10-12). The LCID may be the same as or different from the new LCID discussed for method 1 above.

In method 2-1, when a radio base station which received PHR detects LCID indicating PHR CG PHR, for example, it judges that the PHR contains PH information of a plurality of CGs. Then, based on the CGi field of the MAC CE, the radio base station recognizes the PH information of which CG is contained in the MAC CE, and acquires the PH information of the CG recognized.

Next, method 2-2 will be described. Method 2-2 can adopt the same configuration of PHR MACCE as that of method 1 (MAC CE not including a field for specifying to which PHR CG the information contained in the MAC CE corresponds). In this case, in order to distinguish PHR MAC CEs regarding a plurality of PHR CGs, different LCIDs are set to the PHR CGs, respectively.

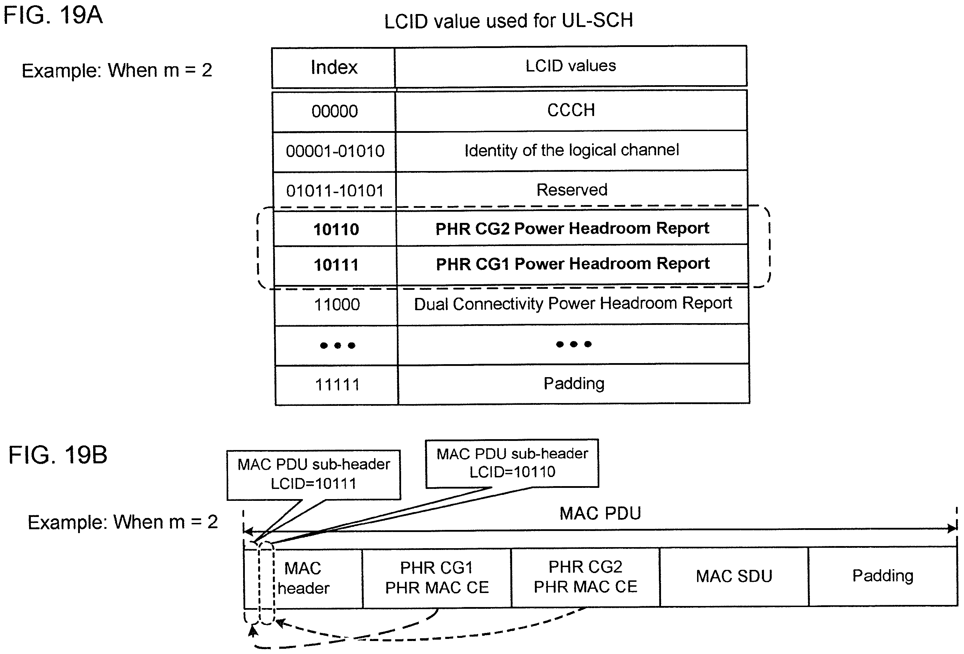

FIG. 19 is a diagram showing another example of the method 2. FIG. 19 illustrates an example in which the maximum number of PHR CGs, m = 2, but the value of m is not limited to this. FIG. 19A is a diagram showing another example of the LCID value used for an uplink shared channel.

In FIG. 19A, LCID corresponding to an index "10111" indicates that PHR MAC CE for PHR CG1 (for example, PHR CG1 PHR MAC CE shown in FIG. 15A) is contained in the MAC PDU. Moreover, in FIG. 19A, LCID corresponding to an index "10110" indicates that PHR MAC CE for PHR CG2 (for example, PHR CG2 PHR MAC CE shown in FIG. 15B) is contained in the MAC PDU.

Here, in the existing system, the LCID corresponding to an index "10111" or "10110" is only reserved, but not used. Note that the configuration of the LCID indicating PHR CG PHR is not limited that show in FIG. 19A, but, it may be assigned to, for example, some other index. Moreover, not only in method 2-2, but also in method 1, different LCIDs may be set to the PHR CGs, respectively as shown in FIG. 19A.

FIG. 19B is a diagram showing an example of MAC PDU including PHR MAC CE in method 2-2. The MAC PDU is configured to contain PHR MAC CEs of both PHR CG1 and CG2. Moreover, in order to indicate that MAC CEs regarding the two CGs are contained, corresponding subheaders (LCID = 10111, 10110) are contained in the MAC headers.

In method 2-2, when a radio base station which received PHR detects LCID indicating a predetermined PHR CG PHR, it judges that the PHR contains the PH information of the corresponding CG. Then, the radio base station acquires the PH information about the corresponding CG based on the MAC CE recognized.

As stated above, by method 2, PHR needs not to contain the PH information of all active CCs, but it suffices if it contains only the PH information of CCs belonging to a predetermined PHR CG; therefore the overhead can be reduced appropriately. Moreover, since the user terminal can transmit PHR of an arbitrary CG by using an arbitrary CC, traffic control or the like between CCs, etc. can be performed more flexibly.

In method 2-1, a new field indicating a CG is provided in MAC CE, and thus the PH information about a plurality of CG can be contained therein. In method 2-2, a plurality of LCIDs are specified and therefore a plurality of PHR MAC CEs corresponding to different CGs can be contained in the MAC PDU.

In method 2, when all the CCs contained in an arbitrary PHR CG are inactive, the PHR of the PHR CG may not necessarily be transmitted regardless of the timers or the like. With this configuration, such occasions that PHRs of CCs not used (inactive CCs) are transmitted unnecessarily can be suppressed, thereby making it possible to further reduce the overhead.

(Radio communication system)

Hereinafter, the structure of a radio communication system according to an embodiment of the present invention will be described. In this radio communication system, the radio communication method according to each of the above-described embodiment is applied. Note that the radio communication methods according to the above-described embodiments may be applied independently or in combination.

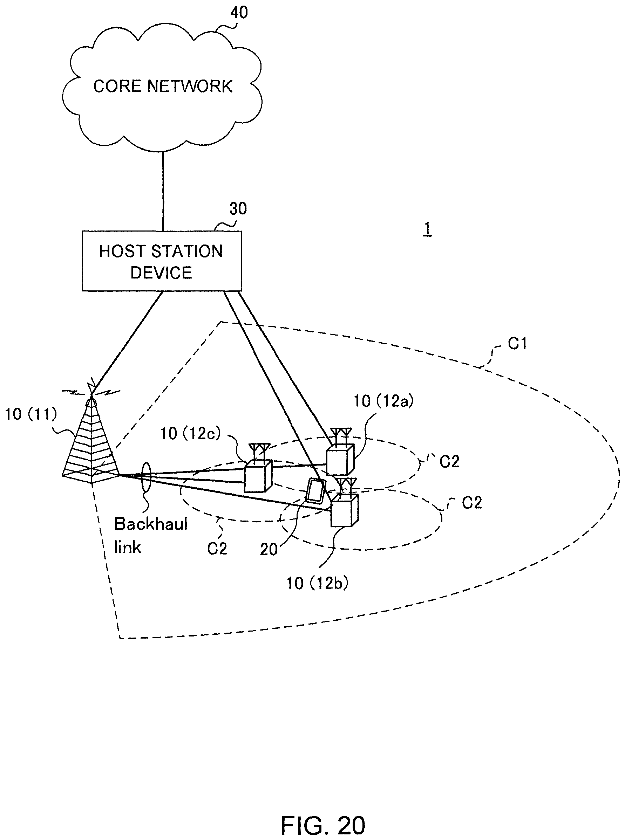

FIG. 20 is a diagram showing an example of the schematic structure of the radio communication system according to an embodiment of the present invention. In a radio communication system 1, carrier aggregation (CA) and/or dual connectivity (DC) are applicable, in which a plurality of fundamental frequency blocks (component carriers), one unit of each of which is a system bandwidth of a LTE system. (for example, 20 MHz), are integrated. The radio communication system 1 may be called SUPER 3G, LTE-A (LTE-Advanced), IMT-Advanced, 4G and 5G, FRA (Future Radio Access) or the like.

The radio communication system 1 shown in FIG. 20 comprises a radio base station 11 forming a macro-cell C1, and radio base stations 12a to 12c each located in the macro-cell C1 and forming a small cell C2 narrower than the macro-cell C1. Moreover, a user terminal 20 is placed in the macro-cell C1 and in each of the small cells C2.

The user terminal 20 is connectable with both sides of the radio base station 11 and the radio base stations 12. It is assumed here that the user terminal 20 uses the macro-cell C1 and the small cells C2, which adopt different frequencies, simultaneously by CA or DC. Moreover, the user terminal 20 can apply CA or DC using a plurality of cells (CCs) (for example, six or more CCs).

Between the user terminal 20 and the radio base station 11, a carrier with narrow bandwidth (referred to as the existing carrier, Legacy carrier, etc.) is used in a relatively low frequency band (for example, 2 GHz) for communication. On the other hand, between the user terminal 20 and the radio base stations 12, a carrier with wide bandwidth may be used in a relatively high frequency band (for example, 3.5 GHz, 5 GHz, etc.), or the same carrier as that used for the radio base station 11 may be used. Note that the configuration of the frequency bands adopted by the radio base stations is not limited to this. Between the radio base station 11 and the radio base stations 12 (or between two radio base stations 12), wired connection (for example, an optical fiber, X2 interface, etc. based on the common public radio interface (CPRI)), or wireless connection may be established.

The radio base station 11 and the radio base stations 12 are each connected to a host device 30 and also to a core network 40 through the host station device 30. The host station device 30 contains, for example, an access gateway unit, a radio network controller (RNC), a mobility management entity (MME) and the like, but it is not limited to this. Each of the radio base stations 12 may be connected to the host station device 30 through the radio base station 11.

The radio base station 11 is a station which handling relatively wide coverage, and may be called a macro base station, an aggregation node, eNB (eNodeB), a transmission/receiving point, or the like. On the other hand, the radio base stations 12 are each a station handling a local coverage, and may be called a small base station, a micro base station, a pico base station, a femto base station, HeNB (Home eNodeB), RRH (Remote Radio Head), a transmission/receiving point, or the like. Hereafter, when the radio base stations 11 and 12 are not distinguished from each other, they will be generally named as radio base stations 10.

The user terminals 20 are each a terminal supporting various communication modes such as LTE and LTE-A, and they may contain not only mobile communication terminals but also fixed communication terminals.

In the radio communication system 1, the orthogonal frequency division multiple access (OFDMA) is applied to the downlink, and the single career frequency division multiple access (SC-FDMA) is applied to the uplink as the radio access mode. OFDMA is a multi-carrier transmission system which carries out communications by dividing a frequency band into a plurality of narrow frequency bands (subcarriers) and mapping data in each of the subcarriers. SC-FDMA is a single carrier transmission system which reduces interference between terminals by dividing a system bandwidth into bands comprising one or continuous resource blocks for each terminal for a plurality of terminals to be able to use different bands among each other. Note that the uplink and downlink radio access modes are not limited to the combination of these.

The radio communication system 1 uses, as the downlink channel, the physical downlink shared channel (PDSCH) shared by the user terminals 20, physical broadcast channel (PBCH:), downlink L1/L2 control channel and the like. User data, upper layer control information, system information block (SIB), etc. are transmitted by PDSCH.

Further, the master information block (MIB) is transmitted by PBCH.

The downlink L1/L2 control channel contains Physical Downlink Control Channel (PDCCH), Enhanced Physical Downlink Control Channel (EPDCCH), Physical Control Format Indicator Channel (PCFICH), Physical Hybrid-ARQ Indicator Channel (PHICH), etc. The downlink control information (DCI) including the scheduling information of PDSCH and PUSCH are transmitted by PDCCH. The number of OFDM symbols used for PDCCH is transmitted by PCFICH. The acknowledgement signal (ACK/NACK) for the delivery of HARQ to PUSCH is transmitted by PHICH. The EPDCCH is subjected to frequency division multiplexing along with PDSCH (downlink shared data channel), and used for transmission of DCI or the like, as in the case of PDCCH.

The radio communication system 1 uses, as the uplink channel, an uplink shared channel (Physical Uplink Shared Channel: PUSCH) shared by the user terminals 20, an uplink control channel (Physical uplink control channel: PUCCH), a random access channel (Physical Random Access Channel: PRACH), etc. The user data and upper layer control information are transmitted by PUSCH. The downlink wireless quality information (Channel Quality Indicator:CQI), an acknowledgment signal, etc. are transmitted by PUCCH. The random access preamble for establishing connection with a cell is transmitted by PRACH.

<Radio base stations>

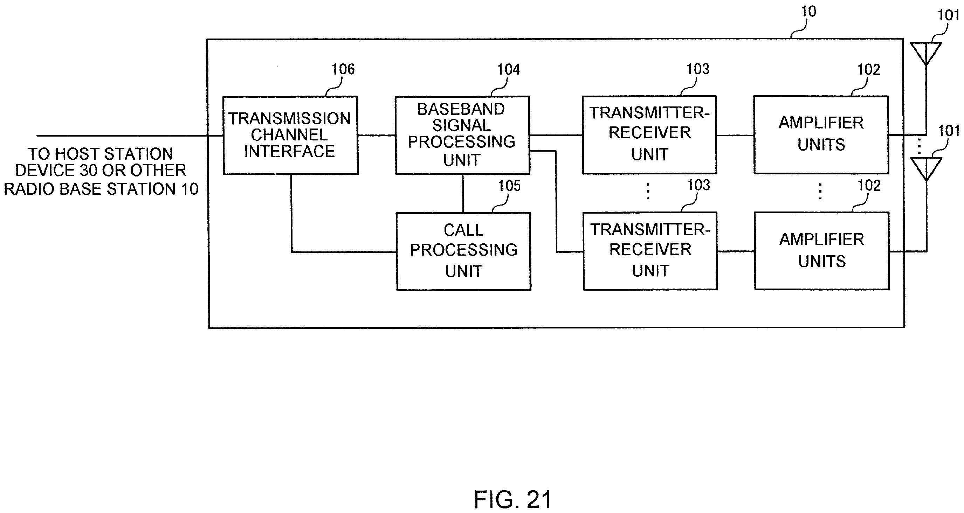

FIG. 21 is a diagram showing an example of the entire configuration of a radio base station according to an embodiment of the present invention. A radio base station 10 comprises a plurality of transmission/receiving antennas 101, amplifier units 102, transmitter-receiver units 103, a baseband signal processing unit 104, a call processing unit 105 and a transmission channel interface 106. Note that as to the transmission/receiving antenna 101, amplifier unit 102 and transmitter-receiver unit 103, it suffices if the station is configured to include one or more of each.

The user data transmitted from the radio base station 10 to the user terminal 20 by the downlink is input from the host station device 30 to the baseband signal processing unit 104 through the transmission channel interface 106.

In the baseband signal processing unit 104, the user data is subjected to transmission processings such as processing of PDCP (Packet Data Convergence Protocol) layer, division and coupling of user data, transmission of RLC (Radio Link Control) layers such as retransmission control of MAC (Medium Access Control) (for example, transmission of HARQ (Hybrid Automatic Repeat reQuest)), scheduling, transmission format selection, channel coding, Inverse Fast Fourier Transform (IFFT) processing, pre-coding, and then transmitted to the transmitter-receiver unit 103. Further, the downlink control signal is subjected to transmission processing such as channel coding and Inverse Fast Fourier Transform and then transmitted to the transmitter-receiver unit 103.

The transmitter-receiver unit 103 converts the baseband signal pre-coded for each antenna and outputted from the baseband signal processing unit 104 into a radio frequency band, to be transmitted. The radio frequency signal subjected to frequency conversion in the transmitter-receiver unit 103 is amplified by the amplifier unit 102, and transmitted from the transmitter-receiver antennas 101. The transmitter-receiver units 103 may be formed from transmitters/receivers, transmission-receiving circuits, or transmission-receiving equipment which can be described based on the common knowledge in the technical field of the present invention. The transmitter-receiver units 103 each may be configured as one unit of transmitter-receiver, or to contain a transmitter and receiver.

On the other hand, as to the uplink signal, the radio frequency signal received with the transmitter-receiver antenna 101 is amplified by the amplifier unit 102. The transmitter-receiver unit 103 receives the uplink signal amplified by the amplifier unit 102. The transmitter-receiver unit 103 subjects the received signal to frequency conversion into a baseband signal and outputs it to the baseband signal processing unit 104.

In the baseband signal processing unit 104, the user data contained in the input uplink signal is subjected to Fast Fourier Transform (FFT) processing, Inverse Discrete Fourier Transform (IDFT) processing, error correction decoding, reception processing of MAC retransmission control, and reception processing of an RLC layer and a PDCP layer, and transmitted to the host station device 30 through the transmission channel interface 106. The call processing unit 105 performs call processings such as setting and releasing of a communication channel, management of the status of the radio base station 10 and management of a radio resource.

The transmitter-receiver unit 103 transmits a downlink signal including the uplink transmission power control information produced by a transmission signal generator unit 302, PHR setting information, etc. to the user terminal 20.

The transmission channel interface 106 transmits/receives signals with the host station device 30 through a predetermined interface. The transmission channel interface 106 may transmit/receive signals (backhaul signaling) with an adjacent radio base station 10 via a base station interface (for example, an optical fiber or X2 interface conforming with Common Public Radio Interface (CPRI)).

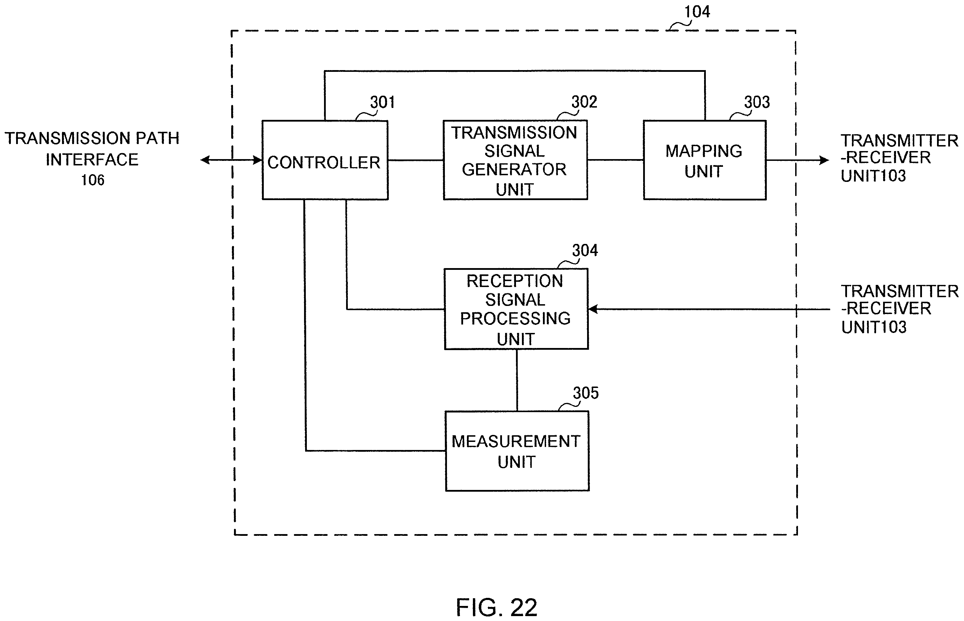

FIG. 22 is a diagram showing an example of the functional configuration of the radio base station according to this embodiment. Note that FIG. 22 mainly shows only the functional block of the characterizing features of this embodiment and it is assumed that the radio base station 10 naturally contains other functional blocks necessary for radio communications. As shown in FIG. 22, the baseband signal processing unit 104 comprises a controller (scheduler) 301, a transmission signal generator unit 302, a mapping unit 303, a reception signal processing unit 304 and a measurement unit 305.

The controller (scheduler) 301 controls the entire radio base station 10. The controller 301 can be formed from any controller, control circuit or control unit which can be described based on the common knowledge in the technical field of the present invention.

The controller 301 controls, for example, the generation of signals by the transmission signal generator unit 302, and the assignment of signals by the mapping unit 303. Further, the controller 301 controls the reception processing of signals by the reception signal processing unit 304 and the measurement of signals by the measurement unit 305.

The controller 301 controls the scheduling (for example, resource assignment) of system information, downlink signals transmitted by PDSCH and downlink control signals transmitted by PDCCH and/or EPDCCH. Further, it controls the scheduling of reference signals such as synchronization signals, CRS (Cell-specific Reference Signal), CSI-RS (Channel State Information Reference Signal) and DM-RS (Demodulation Reference Signal).

Moreover, the controller 301 controls the scheduling of uplink data signals transmitted by PUSCH, uplink control signals transmitted by PUCCH and/or PUSCH (for example, a delivery acknowledgement signal (HARQ-ACK)), a random access preamble transmitted by PRACH and a uplink reference signal, and the like.

Furthermore, the controller 301 controls the transmission signal generator unit 302 and the mapping unit 303 to adjust the uplink transmit power of the user terminal 20 linked to the radio base station 10. More specifically, based on the PHR and channel state information (CSI) reported from the user terminal 20, the error rate of uplink data, a HARQ retransmission count, etc., the controller 301 gives an instruction to the transmission signal generator unit 302 to produce downlink control information (DCI) including a transmission power control (TPC) command, and controls the mapping unit 303 to notify the DCI to the user terminal 20.

Here, the controller 301 acquires the PH of each active CC used by the user terminal 20 based on the PHR input from the reception signal processing unit 304. For the PHR, a type extended further from PHR used by the conventional CA (the first embodiment), a PHR extended further from PHR used by the conventional DC (the second embodiment), a type which can be changed as to whether PH information are contained in unit of PHR CG (the third embodiment), or the like may be used.

Moreover, the controller 301 computes (estimation) the power headroom for each CC based on the PHR notified from the user terminal 20. Then, the scheduling and transmission power control may be performed in consideration of the power headroom.

In addition, the controller 301 may control the transmission signal generator unit 302 and the mapping unit 303 to produce the information (PHR setting information) for setting the sets of the PHR timers and parameters, to be transmitted to the user terminal 20. The information may be information indicating that, for example, one set of a timer and parameter is assigned to all the CGs (all the CCs) (the first embodiment) or information indicating that different sets of timers and parameters are assigned to CGs, respectively (the second and third embodiments).

Based on the direction from the controller 301, the transmission signal generator unit 302 generates downlink signals (downlink control signal, downlink data signal, downlink reference signal etc.) and outputs them to the mapping unit 303. The transmission signal generator unit 302 can be formed from a signal generating device, signal generation circuit or signal generation device which can be described based on the common knowledge in the technical field of the present invention.

The transmission signal generator unit 302 generates downlink DL assignment notifying the assignment information of downlink signals and an UL grant notifying the assignment information of uplink signals based on, for example, the instruction from the controller 301. Further, the downlink signals are subjected to coding and modulation processing according to the coding rate, the modulation mode, etc. determined based on the channel state information (CSI) from each user terminal 20, etc.

Further, the transmission signal generator unit 302 generates a downlink signal including the information for controlling the uplink transmit power of the user terminal 20, PHR setting information, etc., as mentioned above.

The mapping unit 303 maps the downlink signal generated in the transmission signal generator unit 302 in predetermined radio resources based on the instruction from the controller 301, and outputs it to the transmitter-receiver unit 103. The mapping unit 303 can be formed from any mapper, mapping circuit or wafer scanner which can be described based on the common knowledge in the technical field of the present invention.

The reception signal processing unit 304 performs reception processings (for example, demapping, demodulation, decoding, etc.) to the reception signal input from the transmitter-receiver unit 103. Here, the reception signals are, for example, uplink signals transmitted from the user terminal 20 (uplink control signal, uplink data signal, uplink reference signal, etc.). The reception signal processing unit 304 can be formed from a signal processor, signal processing circuit or signal processing device which can be described based on the common knowledge in the technical field of the present invention.

The reception signal processing unit 304 outputs information decoded by the reception processing to the controller 301. Further, the reception signal processing unit 304 outputs the reception signals and signals after the reception processing to the measurement unit 305.

The measurement unit 305 measures the received signals. The measurement unit 305 can be formed from any measuring instrument, measurement circuit or measuring device which can be described based on the common knowledge in the technical field of the present invention.

The measurement unit 305 may measure, for example, the received power of the signal received (such as Reference Signal Received Power (RSRP)), the reception quality (such as Reference Signal Received Quality (RSRQ)), the channel state, etc. Measurement results may be outputted to the controller 301.

<User terminal>

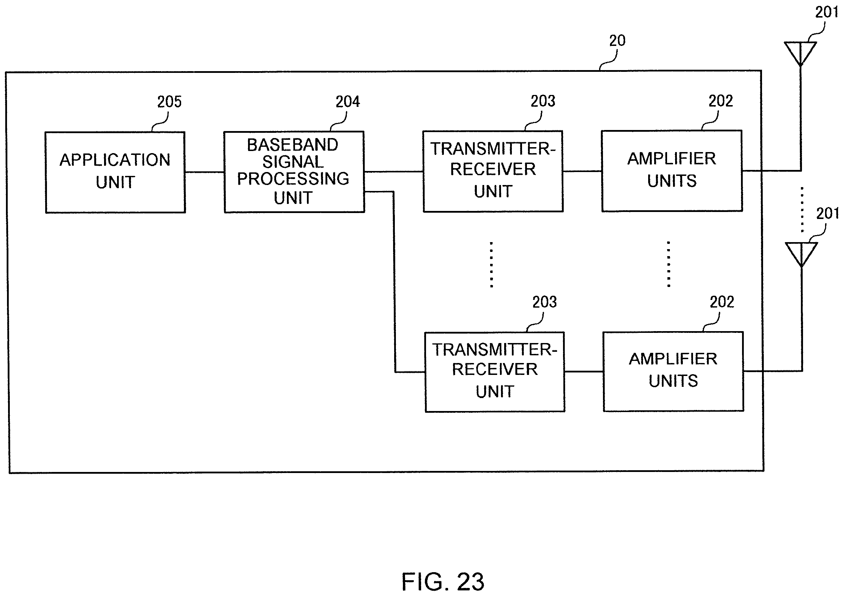

FIG. 23 is a diagram showing an example of the entire configuration of the user terminal to according to this embodiment. The user terminal 20 comprises a plurality of transmission/receiving antennas 201, amplifier units 202, transmitter-receiver units 203, a baseband signal processing unit 204 and an application unit 205.

Note that as to the transmission/receiving antenna 201, amplifier unit 202 and transmitter-receiver unit 203, it suffices if the station is configured to include one or more of each.

The radio frequency signal received with the transmitter-receiver antenna 201 is amplified in the amplifier unit 202. The transmitter-receiver unit 203 receives the downlink signal amplified in the amplifier unit 202. The transmitter-receiver unit 203 subjects the reception signal to frequency conversion into a baseband signal, and outputs it to the baseband signal processing unit 204. The transmitter-receiver unit 203 may be formed from a transmitter/receiver, a transmitter-receiver circuit or transmitting/receiving equipment which can be described based on the common knowledge in the technical field of the present invention. The transmitter-receiver units 103 each may be configured as one unit of transmitter-receiver, or to include a transmitter and receiver.

The transmitter-receiver unit 203 receives a downlink signal including the information for controlling the uplink transmit power of the user terminal 20, PHR setting information, etc. Further, it may be configured to receive the information about the configuration of PHR CG (the third embodiment).

The baseband signal processing unit 204 performs reception processings such as FFT processing, error correction decoding and retransmission control to the input baseband signal. The downlink user data is transmitted to the application unit 205. The application unit 205 performs processing of the layers higher than the physical layer or MAC layer. Moreover, of the downlink data, the broadcast information is also transmitted to the application unit 205.

On the other hand, the user data of the uplink is input to the baseband signal processing unit 204 from the application unit 205. In the baseband signal processing unit 204, the data is subjected to the transmitting processing of retransmission control (for example, transmitting processing of HARQ), channel coding, precoding, the Discrete Fourier Transform (DFT) processing, IFFT processing, etc., and then transmitted to the transmitter-receiver unit 203. The transmitter-receiver unit 203 converts the baseband signal output from the baseband signal processing unit 204 into a radio frequency band, to be transmitted. The radio frequency signal subjected to the frequency conversion in the transmitter-receiver unit 203 is amplified by the amplifier unit 202 and transmitted from the transmitter-receiver antenna 201.

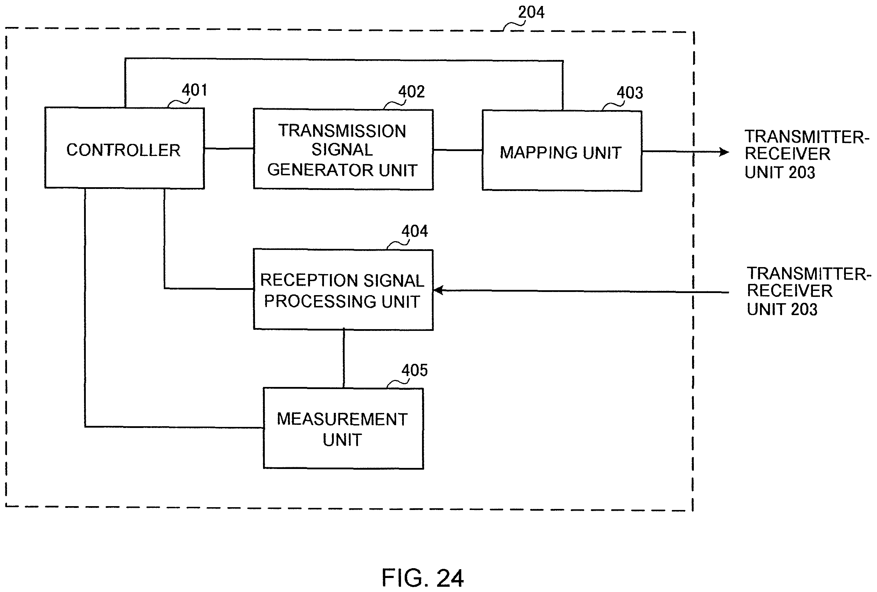

FIG. 24 is a diagram showing an example of the functional constitution of the user terminal to according to this embodiment. FIG. 24 mainly shows only the functional block of the characterizing features of this embodiment and it is assumed that the user terminal 20 naturally includes other functional blocks necessary for radio communications. As shown in FIG. 24, the baseband signal processing unit 204 of the user terminal 20 comprises a controller 401, a transmission signal generator unit 402, a mapping unit 403, a reception signal processing unit 404 and a measurement unit 405.

The controller 401 controls the whole user terminal 20. The controller 401 can be formed from a controller, control circuit or control unit which can be described based on the common knowledge in the technical field of the present invention.

The controller 401 controls, for example, the generation of signals by the transmission signal generator unit 402, and the assignment of signals by the mapping unit 403. Further, the controller 401 controls the reception processing of signals by the reception signal processing unit 404 and the measurement of signals by the measurement unit 405.

The controller 401 acquires the downlink control signal transmitted from a radio base station 10 (signal transmitted by PDCCH/EPDCCH) and the downlink data signal (signal transmitted by PDSCH) from the reception signal processing unit 404. The controller 401 controls the generation of uplink control signals (for example, delivery acknowledgment signal (HARQ-ACK) etc.) or uplink data signals based on the result of judgment as to whether the retransmission control of the downlink control signal or downlink data signal is required.

Furthermore, the controller 401 controls the uplink transmission power of the user terminal 20. More specifically, the controller 401 controls the transmit power of each CC based on signaling (for example, TPC command) from the radio base station 20. Moreover, the controller 401 computes the PH of each CC based on the maximum transmittable power, PUCCH transmission power, PUSCH transmission power, etc. for each CC. PH thus computed is output to the transmission signal generator unit 402 and is used for creation of PHR.

When the information (PHR setting information) for setting a set of PHR timer and parameter is input from the reception signal processing unit 404, the controller 401 sets the PHR timer and parameter to the measurement unit 405. Further, when reported from the measurement unit 405 to trigger PHR regarding a predetermined CG (for example, PUCCH CG, PHR CG), the controller 401 controls the transmission signal generator unit 402 and the mapping unit 403 to generate the corresponding PHR to be transmitted.

Based on the instruction from the controller 401, the transmission signal generator unit 402 generates uplink signals (uplink control signal, uplink data signal, uplink reference signal, etc.) and outputs them to the mapping unit 403. The transmission signal generator unit 402 can be formed from a signal generator, signal generating circuits or signal generating device which can be described based on the common knowledge in the technical field of the present invention.

The transmission signal generator unit 402 generates the delivery acknowledgment signal (HARQ-ACK) and the uplink control signal regarding the channel state information (CSI), for example, based on the instruction from the controller 401. Further, the transmission signal generator unit 402 generates an uplink data signal based on the instruction from the controller 401. For example, when the downlink control signal notified from a radio base station 10 contains the UL Grant, the transmission signal generator unit 402 is instructed by the controller 401 to generate the uplink data signal.

The transmission signal generator unit 402 generates PHR MAC CE including the PH information about one or a plurality of CGs based on the instruction from the controller 401 to form MAC PDU, and adds it to be contained in a transmission signal, to be output to the mapping unit 403. Here, the transmission signal generator unit 402 may add the information (for example, LCID) for specifying a CG related to PHR MAC CE to the MAC PDU. The transmission signal generator unit 402 may be configured to determine which one to be used among the PHR of the embodiments described and PHR of the existing system, according to the number of CCs assigned to the user terminal 20, and generate the transmission signal including the determined PHR.

The mapping unit 403 maps the uplink signals generated in the transmission signal generator unit 402 in radio resources based on the instruction from the controller 401, and outputs them to the transmitter-receiver unit 203. The mapping unit 403 can be formed from any mapper, mapping circuit or wafer scanner which can be described based on the common knowledge in the technical field of the present invention.

The reception signal processing unit 404 performs reception processings (for example, demapping , demodulation, decoding, etc.) to the reception signals input from the transmitter-receiver unit 203. Here, the reception signals are downlink signals (downlink control signal, downlink data signal, downlink reference signal, etc.) transmitted from the radio base station 10, for example. The reception signal processing unit 404 can be formed form any signal processor, signal processing circuit or signal processing device which can be described based on the common knowledge in the technical field of the present invention. Moreover, the reception signal processing unit 404 can form a receiving unit according to the present invention.

The reception signal processing unit 404 outputs the information decoded by the reception processing to the controller 401. The reception signal processing unit 404 outputs, for example, notification information, system information, RRC signaling, DCI, etc. to the controller 401. Further, the reception signal processing unit 404 outputs the reception signals and signals after the reception processing to the measurement unit 405.

The measurement unit 405 measures the received signals. The measurement unit 405 can be formed from any measuring instrument, measuring circuit or measuring device which can be described based on the common knowledge in the technical field of the present invention.

The measurement unit 405 may be configured to measure, for example, the received power (such as RSRP), reception quality (such as RSRQ), the channel state, etc. of a signal received. Measurement results may be output to the controller 401.

The measurement unit 405 can measure the downlink path loss of each CC. The measurement unit 405 includes two PHR timers (periodicPHR-Timer and prohibitPHR-Timer). The measurement unit 405 is set up with the information about the PHR timers and path loss from the controller 401. The measurement unit 405 notifies the controller 401 to trigger the PHR of a predetermined CG based on the PHR timers and path loss.

Note that the block diagram used to explain the above embodiment shows the blocks in units of functions. The functional blocks (structural units) are realized by an arbitrary combination of hardware and software. Further, how to realize each functional block is not particularly limited. That is, each functional block may be realized by one physically coupled device or two more physically separated devices connected by a cable or radio.

For example, part or all of each function of the radio base station 10 or the user terminal 20 may be realized using hardware such as Application Specific Integrated Circuit (ASIC), Programmable Logic Device (PLD) or Field Programmable Gate Array (FPGA). Further, the radio base station 10 or the user terminal 20 may be realized by a computer device including a processor (Central Processing Unit: CPU), a communication interface for network connection, a memory, and a computer-readable storage medium holding a program. That is, the radio base stations, user terminals, etc. according to an embodiment of the present invention each may function as a computer which execute processing of the radio communication method according to the present invention.

Here, the processor, the memory, etc. are connected by a bus for data communications. Further, the computer-readable recording media are, for example, a flexible disk, a magneto-optical disc, a read-only memory (ROM), Erasable Programmable ROM (EPROM), Compact Disc-ROM (CD-ROM), Random Access Memory (RAM) and a hard disk. Furthermore, the program may be transmitted from a network through an electric telecommunication line. Moreover, the radio base stations 10 and the user terminals 20 may include an input device such as an entry key and an output unit such as a display.

The functional structures of the radio base stations 10 and the user terminal 20 may be realized by the above-described hardware or a software module executed by the processor, or a combination of both. The processor drives the operating system to control the entire user terminal. Further, the processor reads the program, software module and the data from the storage medium to the memory, and executes various kinds of processings accordingly.

Here, it suffices if the program is a type makes a computer execute the operations described in each of the above-provided embodiments. For example, the controller 401 of the user terminal 20 may be realized by a control program stored in a memory to be operated by a processor, and the other functional blocks may be realized similarly.

In the above, the present invention is described in detail, but it is clear for a person skilled in the art that the present invention is not limited to the embodiments described in this specification. For example, the embodiments described above may be used solely or in combination. The present invention can be carried out with revisions and modifications without departing from the spirit of the invention defined by the claims. The descriptions are intended to cover only examples of the invention and are not meant to restrict the scope and spirit of the invention.

This application is based on JP 2015-071924 A filed on March 31, 2015, the entire contents of which are incorporated herein by reference.

**Claims**

1. A user terminal communicating using a plurality of component carriers (CCs), comprising:

   a generator unit which generates a power headroom report (PHR) including information about a power headroom (PH) for each of CCs of a predetermined cell group among activated CCs; and
   a transmission unit which transmits the generated PHR.

2. The user terminal of Claim 1, wherein
   the transmission unit transmits PHR regarding a predetermined cell group by the predetermined cell group.

3. The user terminal of Claim 1, wherein
   the transmission unit transmits PHR regarding a predetermined cell group by a cell group different from the predetermined cell group.

4. The user terminal of Claim 2 or 3, wherein
   the generator unit generates a PHR which contains, in a medium access control (MAC) header, a logical channel ID (LCID) indicating that the PHR relates to the predetermined cell group.

5. The user terminal of Claim 4, wherein
   the generator unit generates a PHR which contains, in a MAC control element (CE), a field indicating that the information about the predetermined cell group is contained.

6. The user terminal of Claim 4, wherein
   the LCID takes a different value from one corresponding cell group to another.

7. The user terminal of any one of Claims 1 to 6, wherein
   the predetermined cell group is associated with a physical uplink control channel (PUCCH) cell group comprised of one or more CCs including a CC to which PUCCH is set.

8. The user terminal of any one of Claims 1 to 7, further comprising:

   a receiving unit which receives information about PHR transmission condition,
   wherein
   the transmission unit determines a timing for transmitting a PHR based on the condition set for each respective cell group.

9. A radio base station that is able to communicate with a user terminal using a plurality of component carriers (CCs), comprising:

   a receiving unit which receives a power headroom report (PHR) including information about a power headroom (PH) for each of CCs which form a predetermined cell group, of CCs activated by the user terminal; and
   a controller which controls uplink transmit power of the user terminal based on the PHR.

10. A radio communication method for a user terminal using a plurality of component carriers (CCs) for communication, the method comprising:

    generating a power headroom report (PHR) including information about a power headroom (PH) for each of CCs which form a predetermined cell group, of activated CCs; and
    transmitting the generated PHR.

FIG. 1

# FIG. 2A

# FIG. 2B

Multiple PUCCH CGs

| PUCCH CG1 | PUCCH CG2 | PUCCH CG3 |
|---|---|---|
| PCell ● ● ● | PUCCH SCell ● ● ● | PUCCH SCell ● ● ● |

# FIG. 2C

Single PUCCH CG

PCell ● ● ● ● ● ●

EP 3 280 195 A1

one common set of PHR Timers and parameters

PUCCH CG 1

PUCCH CG 2

PUCCH CG 4

Freq.

UE

FIG. 3

EP 3 280 195 A1

19

| $C_7$ | $C_6$ | $C_5$ | $C_4$ | $C_3$ | $C_2$ | $C_1$ | $C_0$ |
|---|---|---|---|---|---|---|---|

• • •

| $C_{31}$ | $C_{30}$ | $C_{29}$ | $C_{28}$ | $C_{27}$ | $C_{26}$ | $C_{25}$ | $C_{24}$ |
|---|---|---|---|---|---|---|---|
| P | V | PH (Type 2, PCell) | | | | | |
| R | R | $P_{CMAX,c}$ 1 | | | | | |
| P | V | PH (Type 1, PCell) | | | | | |
| R | R | $P_{CMAX,c}$ 2 | | | | | |
| P | V | PH (Type 1, SCell 1) | | | | | |
| R | R | $P_{CMAX,c}$ 3 | | | | | |

• • •

| P | V | PH (Type 2, PUCCH SCell 8) |
|---|---|---|
| R | R | $P_{CMAX,c}$ 10 |
| P | V | PH (Type 1, PUCCH SCell 8) |
| R | R | $P_{CMAX,c}$ 11 |

• • •

| P | V | PH (Type 2, PUCCH SCell 16) |
|---|---|---|
| R | R | $P_{CMAX,c}$ 19 |
| P | V | PH (Type 1, PUCCH SCell 16) |
| R | R | $P_{CMAX,c}$ 20 |

• • •

FIG. 4

FIG. 5

EP 3 280 195 A1

| $C_7$ | $C_6$ | $C_5$ | $C_4$ | $C_3$ | $C_2$ | $C_1$ | $C_0$ |
|---|---|---|---|---|---|---|---|

• • •

| $C_{31}$ | $C_{30}$ | $C_{29}$ | $C_{28}$ | $C_{27}$ | $C_{26}$ | $C_{25}$ | $C_{24}$ |
|---|---|---|---|---|---|---|---|
| P | V | PH (Type 2, PCell) | | | | | |
| R | R | $P_{CMAX,c}$ 1 | | | | | |
| P | V | PH (Type 2, PUCCH SCell 8) | | | | | |
| R | R | $P_{CMAX,c}$ 2 | | | | | |
| P | V | PH (Type 2, PUCCH SCell 16) | | | | | |
| R | R | $P_{CMAX,c}$ 3 | | | | | |

• • •

| P | V | PH (Type 1, PCell) |
|---|---|---|
| R | R | $P_{CMAX,c}$ 5 |

• • •

| P | V | PH (Type 1, PUCCH SCell 8) |
|---|---|---|
| R | R | $P_{CMAX,c}$ 13 |

• • •

| P | V | PH (Type 1, PUCCH SCell 16) |
|---|---|---|
| R | R | $P_{CMAX,c}$ 21 |

• • •

FIG. 6

PHR triggers

DL path-loss change
of PUCCH CG2

DL path-loss change
of PUCCH CG2

DL path-loss change
of PUCCH CG3

$t_1$ $t_2$ $t_3$ Time

FIG. 7

EP 3 280 195 A1

EP 3 280 195 A1

PHR at $t_1$, $t_2$

| $C_7$ | $C_6$ | $C_5$ | $C_4$ | $C_3$ | $C_2$ | $C_1$ | $C_0$ |
|---|---|---|---|---|---|---|---|

• • •

| $C_{31}$ | $C_{30}$ | $C_{29}$ | $C_{28}$ | $C_{27}$ | $C_{26}$ | $C_{25}$ | $C_{24}$ |
|---|---|---|---|---|---|---|---|
| P | V | PH (Type 2, PCell) | | | | | |
| R | R | $P_{CMAX,c}$ 1 | | | | | |
| P | V | PH (Type 1, PCell) | | | | | |
| R | R | $P_{CMAX,c}$ 2 | | | | | |
| P | V | PH (Type 1, SCell 1) | | | | | |
| R | R | $P_{CMAX,c}$ 3 | | | | | |

PH for PUCCH CG1
(PSD not changed)

• • •

| P | V | PH (Type 2, PUCCH SCell 8) |
|---|---|---|
| R | R | $P_{CMAX,c}$ 10 |
| P | V | PH (Type 1, PUCCH SCell 8) |
| R | R | $P_{CMAX,c}$ 11 |

PH for PUCCH CG2
(PSD changed)

☺ ☺ ☺

| P | V | PH (Type 2, PUCCH SCell 16) |
|---|---|---|
| R | R | $P_{CMAX,c}$ 19 |
| P | V | PH (Type 1, PUCCH SCell 16) |
| R | R | $P_{CMAX,c}$ 20 |

PH for PUCCH CG3
and CG4
(PSD not changed)

▦ Field corresponding to CCs
in which PSD changed

FIG. 8

FIG. 9A — Type 2 PH

$P_{CMAX,c}$ 1

PCell

PH2

PUCCH

PUSCH

0

FIG. 9B — Type 1 PH

$P_{CMAX,c}$ 2

PCell

PH1

PUSCH

0

FIG. 9C — Type 1 PH

$P_{CMAX,c}$ m

PUCCH SCell n

PH1

PUCCH

PUSCH

0

## FIG. 10A

| PHR parameters | prohibitPHR-Timer | dl-PathlossChange | periodicPHR-Timer |
|---|---|---|---|
| PUCCH CG1 | 10 ms | 1 dB | 20 ms |
| PUCCH CG2 | 20 ms | 3 dB | 50 ms |

## FIG. 10B

Prohibit-timer expires & PL change>3dB
Restart periodic-timer
Restart prohibit-timer

Periodic-timer expires
Restart periodic-timer
Restart prohibit-timer

PUCCH CG2

PHR for CG2

PHR for CG2

PHR for CG2

PUCCH CG1

PHR for CG1

PHR for CG1

PHR for CG1

PHR for CG1

PHR for CG1

PHR for CG1

0    10    20    30    40    50    60    70    80    90    Time [ms]

Prohibit-timer expires & PL change>1dB
Restart periodic-timer
Restart prohibit-timer

Periodic-timer expires
Restart periodic-timer
Restart prohibit-timer

# FIG. 11A

## PHR at 10 ms, 70 ms

| $C_7$ | $C_6$ | $C_5$ | $C_4$ | $C_3$ | $C_2$ | $C_1$ | $C_0$ |
|---|---|---|---|---|---|---|---|

• • •

| $C_{31}$ | $C_{30}$ | $C_{29}$ | $C_{28}$ | $C_{27}$ | $C_{26}$ | $C_{25}$ | $C_{24}$ |
|---|---|---|---|---|---|---|---|
| P | V | PH (Type 2, PCell) | | | | | |
| R | R | $P_{CMAX,c}$ 1 | | | | | |
| P | V | PH (Type 2, PUCCH SCell 16) | | | | | |
| R | R | $P_{CMAX,c}$ 2 | | | | | |
| P | V | PH (Type 1, PCell) | | | | | |
| R | R | $P_{CMAX,c}$ 3 | | | | | |

⊛ ⊛ ⊛

| P | V | PH (Type 1, PUCCH SCell 16) |
|---|---|---|
| R | R | $P_{CMAX,c}$ 18 |

• • •

| P | V | PH (Type 1, SCell 31) |
|---|---|---|
| R | R | $P_{CMAX,c}$ m |

▨ Field corresponding to CCs in which PSD changed

# FIG. 11B

## PHR at 20 ms, 90 ms

| $C_7$ | $C_6$ | $C_5$ | $C_4$ | $C_3$ | $C_2$ | $C_1$ | $C_0$ |
|---|---|---|---|---|---|---|---|

• • •

| $C_{31}$ | $C_{30}$ | $C_{29}$ | $C_{28}$ | $C_{27}$ | $C_{26}$ | $C_{25}$ | $C_{24}$ |
|---|---|---|---|---|---|---|---|
| P | V | PH (Type 2, PCell) | | | | | |
| R | R | $P_{CMAX,c}$ 1 | | | | | |
| P | V | PH (Type 2, PUCCH SCell 16) | | | | | |
| R | R | $P_{CMAX,c}$ 2 | | | | | |
| P | V | PH (Type 1, PCell) | | | | | |
| R | R | $P_{CMAX,c}$ 3 | | | | | |

• • •

| P | V | PH (Type 1, PUCCH SCell 16) |
|---|---|---|
| R | R | $P_{CMAX,c}$ 18 |

☺ ☺ ☺

| P | V | PH (Type 1, SCell 31) |
|---|---|---|
| R | R | $P_{CMAX,c}$ m |

▨ Field corresponding to CCs in which PSD changed

EP 3 280 195 A1

FIG. 12A

PHR CGs

FIG. 12B

PHR CGs

PUCCH CGs

FIG. 13A

PHR CGs

| PHR CG1 | PHR CG2 | PHR CG3 | PHR CG4 |
|---|---|---|---|
| PCell ••• SCell 7 | SCell 8 ••• SCell 15 | SCell 16 ••• SCell 23 | SCell 24 ••• SCell 31 |

PUCCH CGs

| PUCCH CG1 | PUCCH CG2 |
|---|---|
| PCell ••• SCell 7 SCell 8 ••• SCell 15 | SCell 16 ••• SCell 23 SCell 24 ••• SCell 31 |

FIG. 13B

PHR CGs

| PHR CG1 | PHR CG2 |
|---|---|
| PCell ••• SCell 7 SCell 8 ••• SCell 15 | SCell 16 ••• SCell 23 SCell 24 ••• SCell 31 |

PUCCH CGs

| PUCCH CG1 | PUCCH CG2 | PUCCH CG3 | PUCCH CG4 |
|---|---|---|---|
| PCell ••• SCell 7 | SCell 8 ••• SCell 15 | SCell 16 ••• SCell 23 | SCell 24 ••• SCell 31 |

EP 3 280 195 A1

Example: where PUSCH is assigned to SCell 15 and SCell 16

FIG. 14

## FIG. 15A

### PHR CG1 PHR MAC CE

| $C_7$ | $C_6$ | $C_5$ | $C_4$ | $C_3$ | $C_2$ | $C_1$ | $C_0$ |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| P | V | PH (Type 2, PCell) | | | | | |
| R | R | $P_{CMAX,c}$ 1 | | | | | |
| P | V | PH (Type 1, PCell) | | | | | |
| R | R | $P_{CMAX,c}$ 2 | | | | | |
| P | V | PH (Type 1, SCell 1) | | | | | |
| R | R | $P_{CMAX,c}$ 3 | | | | | |

• • •

| P | V | PH (Type 1, SCell 15) | | | | | |
|---|---|---|---|---|---|---|---|
| R | R | $P_{CMAX,c}$ 17 | | | | | |

## FIG. 15B

### PHR CG2 PHR MAC CE

| $C_{23}$ | $C_{22}$ | $C_{21}$ | $C_{20}$ | $C_{19}$ | $C_{18}$ | $C_{17}$ | $C_{16}$ |
|---|---|---|---|---|---|---|---|
| $C_{31}$ | $C_{30}$ | $C_{29}$ | $C_{28}$ | $C_{27}$ | $C_{26}$ | $C_{25}$ | $C_{24}$ |
| P | V | PH (Type 2, PUCCH SCell 16) | | | | | |
| R | R | $P_{CMAX,c}$ 1 | | | | | |
| P | V | PH (Type 1, PUCCH SCell 16) | | | | | |
| R | R | $P_{CMAX,c}$ 2 | | | | | |
| P | V | PH (Type 1, SCell 17) | | | | | |
| R | R | $P_{CMAX,c}$ 3 | | | | | |

• • •

| P | V | PH (Type 1, SCell 31) | | | | | |
|---|---|---|---|---|---|---|---|
| R | R | $P_{CMAX,c}$ 17 | | | | | |

EP 3 280 195 A1

LCID value used for UL-SCH

| Index | LCID values |
|---|---|
| 00000 | CCCH |
| 00001-01010 | Identity of the logical channel |
| 01011-10110 | Reserved |
| **10111** | **PHR CG Power Headroom Report** |
| 11000 | Dual Connectivity Power Headroom Report |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

FIG. 16

EP 3 280 195 A1

eNB

PHR for
PHR CG1 + PHR CG2

PCell

SCell
15

SCell
16

SCell
31

Freq.

PHR CG1

PHR CG2

Example: where PUSCH is assigned to only SCell 15

FIG. 17

## FIG. 18A

### PHR MAC CE for PHR CG 1

| CG4 | CG3 | CG2 | CG1 | R | R | R | R |
|---|---|---|---|---|---|---|---|
| $C_7$ | $C_6$ | $C_5$ | $C_4$ | $C_3$ | $C_2$ | $C_1$ | $C_0$ |
| $C_{15}$ | $C_{14}$ | $C_{13}$ | $C_{12}$ | $C_{11}$ | $C_{10}$ | $C_9$ | $C_8$ |
| P | V | PH (Type 2, PCell) | | | | | |
| R | R | $P_{CMAX,c}$ 1 | | | | | |
| P | V | PH (Type 1, PCell) | | | | | |
| R | R | $P_{CMAX,c}$ 2 | | | | | |
| P | V | PH (Type 1, SCell 1) | | | | | |
| R | R | $P_{CMAX,c}$ 3 | | | | | |
| | | $\bullet\bullet\bullet$ | | | | | |
| P | V | PH (Type 1, SCell 15) | | | | | |
| R | R | $P_{CMAX,c}$ 17 | | | | | |

## FIG. 18B

### PHR MAC CE for PHR CG 2

| CG4 | CG3 | CG2 | CG1 | R | R | R | R |
|---|---|---|---|---|---|---|---|
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| P | V | PH (Type 2, PUCCH SCell 16) | | | | | |
| R | R | $P_{CMAX,c}$ 1 | | | | | |
| P | V | PH (Type 1, PUCCH SCell 16) | | | | | |
| R | R | $P_{CMAX,c}$ 2 | | | | | |
| P | V | PH (Type 1, SCell 17) | | | | | |
| R | R | $P_{CMAX,c}$ 3 | | | | | |
| | | $\bullet\bullet\bullet$ | | | | | |
| P | V | PH (Type 1, SCell 31) | | | | | |
| R | R | $P_{CMAX,c}$ 17 | | | | | |

## FIG. 19A

LCID value used for UL-SCH

Example: When m = 2

| Index | LCID values |
|---|---|
| 00000 | CCCH |
| 00001-01010 | Identity of the logical channel |
| 01011-10101 | Reserved |
| **10110** | **PHR CG2 Power Headroom Report** |
| **10111** | **PHR CG1 Power Headroom Report** |
| 11000 | Dual Connectivity Power Headroom Report |
| • • • | • • • |
| 11111 | Padding |

## FIG. 19B

Example: When m = 2

MAC PDU sub-header LCID=10111

MAC PDU sub-header LCID=10110

MAC PDU

| MAC header | PHR CG1 PHR MAC CE | PHR CG2 PHR MAC CE | MAC SDU | Padding |
|---|---|---|---|---|

EP 3 280 195 A1

FIG. 20

FIG. 21

EP 3 280 195 A1

FIG. 22

FIG. 23

FIG. 24

**EP 3 280 195 A1**

## INTERNATIONAL SEARCH REPORT

International application No.

PCT/JP2016/058867

### A. CLASSIFICATION OF SUBJECT MATTER
*H04W52/34*(2009.01)i, *H04J11/00*(2006.01)i, *H04J99/00*(2009.01)i, *H04W72/04* (2009.01)i

According to International Patent Classification (IPC) or to both national classification and IPC

### B. FIELDS SEARCHED

Minimum documentation searched (classification system followed by classification symbols)
H04W52/34, H04J11/00, H04J99/00, H04W72/04

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | NTT DOCOMO, INC., Discussion on PUCCH on SCell, 3GPP TSG-RAN WG2 #89 R2-150112, 2015.01.30, http://www.3gpp.org/ftp/tsg_ran/WG2_RL2/TSGR2_89/Docs/R2-150112.zip | 1,7,9–10<br>2-4,8<br>5-6 |
| Y<br>A | NTT DOCOMO, INC., PUCCH on SCell for UEs supporting UL-CA, 3GPP TSG RAN WG1 Meeting #80 R1-150509, 2015.02.18, http://www.3gpp.org/ftp/tsg_ran/WG1_RL1/TSGR1_80/Docs/R1-150509.zip | 2-4,8<br>5-6 |
| Y | JP 2013-534769 A  (Nokia Siemens Networks Oy), 05 September 2013 (05.09.2013), paragraph [0031]; fig. 11 & WO 2011/161014 A1 page 11, lines 5 to 10; fig. 11 | 4,8 |

☒ Further documents are listed in the continuation of Box C.        ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 May 2016 (24.05.16) | Date of mailing of the international search report<br>31 May 2016 (31.05.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

41

**INTERNATIONAL SEARCH REPORT**

| International application No. |
| --- |
| PCT/JP2016/058867 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | Samsung, Power headroom report for inter-ENB CA, 3GPP TSG RAN WG2 #84 R2-133823, 2013.11.01, http://www.3gpp.org/ftp/tsg_ran/WG2_RL2/TSGR2_ 84/Docs/R2-133823.zip | 8 |
| P,A | NTT DOCOMO, INC., Views on the remaining issues on PUCCH on SCell for up to 5 CCs, 3GPP TSG RAN WG1 Meeting #80bis R1-151967, 2015.04.11, p.1-2, http://www.3gpp.org/ftp/tsg_ran/WG1_RL1/TSGR1_ 80b/Docs/R1-151967.zip | 1-10 |
| P,A | Huawei, HiSilicon, RRC configuration enhancement for B5C, 3GPP TSG-RAN WG2 Meeting #90 R2-152251, 2015.05.15, http://www.3gpp.org/ ftp/tsg_ran/WG2_RL2/TSGR2_90/Docs/R2-152251. zip | 5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015071924 A